# EUROPÄISCHE PATENTSCHRIFT

(11) **EP 4 226 186 B1**
(45) Veröffentlichungstag und Bekanntmachung des Hinweises auf die Patenterteilung: **01.04.2026**
(21) Anmeldenummer: 21773379.9
(22) Anmeldetag: 08.09.2021
(51) Int. Cl.: G01S 7/539, G01S 15/931

(54) **VERFAHREN ZUM VERMESSEN EINES SEITLICHEN UMFELDS EINES FAHRZEUGS, MESSVORRICHTUNG UND FAHRZEUG**
METHOD FOR MEASURING A LATERAL SURROUNDING AREA OF A VEHICLE, MEASURING DEVICE, AND VEHICLE
PROCÉDÉ DE MESURE DE ZONE ENVIRONNANTE LATÉRALE D'UN VÉHICULE, DISPOSITIF DE MESURE ET VÉHICULE

(30) Priorität: 07.10.2020 DE 102020126172
(43) Veröffentlichungstag der Anmeldung: 16.08.2023
(73) Patentinhaber: Valeo Schalter und Sensoren GmbH, 74321 Bietigheim-Bissingen (DE)
(72) Erfinder: JECKER, Nicolas, 74321 Bietigheim-Bissingen (DE)
(74) Vertreter: Pothmann, Karsten
(86) Internationale Anmeldenummer: PCT/EP2021/074629
(87) Internationale Veröffentlichungsnummer: WO 2022/073706

(56) Entgegenhaltungen:
- EP-A1- 1 484 620
- EP-A1- 1 764 630
- WO-A2-2005/061985
- DE-T5- 112016 007 206

## Beschreibung

Die vorliegende Erfindung betrifft das Gebiet der Parkassistenzsysteme für Kraftfahrzeuge und im Speziellen ein Verfahren und eine Messvorrichtung zum Vermessen eines seitlichen Umfelds eines Fahrzeugs mit einem seitlichen Ultraschall-Sendeempfänger sowie ein dementsprechendes Fahrzeug.

Moderne Fahrzeuge verfügen über Parkassistenzsysteme, die dazu eingerichtet sind, ein seitliches Umfeld eines Fahrzeugs zu vermessen, eine Parklücke zu ermitteln und das Fahrzeug halb- oder vollautomatisch in die Parklücke einzuparken. Ein bekanntes Verfahren zum Vermessen des seitlichen Umfelds verwendet Ultraschall-Sendeempfänger, um die Entfernung zu Objekten in dem seitlichen Umfeld anhand der Laufzeiten zwischen Aussenden eines Sendesignals und Empfangen eines zugehörigen Echosignals zu bestimmen.

Weiter lehrt die DE 10 2005 044 050 A1 ein Verfahren zur Parklückenbestimmung für Kraftfahrzeuge, bei dem eine Bewertung der Höhe des Objekts in einem seitlichen Umfeld eines Kraftfahrzeugs anhand dessen erfolgt, ob in Reaktion auf das Aussenden eines Sendesignals ein einzelnes Echosignal empfangen wird oder in ein und demselben Empfangssignalverlauf zwei Echosignale empfangen werden, die ein Doppelecho bilden.

Diesen Gedanken fortführend lehrt die DE 10 2007 035 219 A1 das Erzeugen eines Objektklassifikationssignals abhängig von einer Anzahl lokaler Maxima eines Empfangssignals.

Die DE 10 351 314 A1 lehrt ein Verfahren zum Bestimmen der Lage eines Reflexionspunkts auf einem Objekt in einem seitlichen Umfeld eines Kraftfahrzeugs. An zwei unterschiedlichen Positionen wird ein jeweiliges Sendesignal ausgesendet, ein zugehöriges Echosignal empfangen und eine jeweilige Entfernung bestimmt. Anhand der beiden Entfernungsmessungen und des Abstands zwischen den beiden Positionen wird sodann mithilfe des Verfahrens der Triangulation bzw. Trilateration eine präzisierte Lage des Objekts berechnet.

Vor diesem Hintergrund besteht eine Aufgabe der vorliegenden Erfindung darin, das Vermessen eines seitlichen Umfelds eines Fahrzeugs zu verbessern.

Demgemäß wird unter einem ersten Aspekt ein Verfahren zum Vermessen eines seitlichen Umfelds eines mit mindestens einem seitlichen Ultraschall-Sendeempfänger versehenen Fahrzeugs vorgeschlagen. Das Verfahren umfasst die Schritte: a) Ansteuern des mindestens einen Ultraschall-Sendeempfängers an einer Vielzahl Sende- und Empfangspositionen entlang einer lateralen Fahrtrichtung des Fahrzeugs zum Aussenden eines jeweiligen Sendesignals in einer transversalen Richtung quer zu der Fahrtrichtung des Fahrzeugs und Empfangen eines jeweiligen aus dem seitlichen Umfeld reflektierten Empfangssignalverlaufs; b) Identifizieren einer Anzahl Echosignale in dem jeweiligen Empfangssignalverlauf; c) Bilden einer Reflexionspunktmenge, indem mehrfach anhand von jeweils zwei Empfangssignalverläufen aus der Vielzahl Empfangssignalverläufe und anhand von jeweils einem Echosignal aus jedem der zwei Empfangssignalverläufe ein jeweiliger Reflexionspunkt in der seitlichen Umgebung trilateriert und in der Reflexionspunktmenge gespeichert wird; d) Bilden mehrerer Paare aus einem jeweiligen primären Reflexionspunkt und einem jeweiligen sekundären Reflexionspunkt der Reflexionspunktmenge, die anhand eines mindestens lagebasierten Kriteriums als Reflexionspunkte einer direkten und/oder indirekten Reflexion an einem selben Objektabschnitt in dem seitlichen Umfeld identifiziert werden; e) Bestimmen einer Objekthöhe an einem jeweiligen der Reflexionspunkte in dem seitlichen Umfeld als hoch, wenn der betreffende Reflexionspunkt ein primärer Reflexionspunkt eines der gebildeten Paare ist, und als niedrig, wenn in Schritt d) kein Paar mit dem betreffenden Reflexionspunkt als primärem oder sekundärem Reflexionspunkt gebildet wurde.

Das vorgeschlagene Verfahren greift somit insbesondere den Gedanken auf, eine Objekthöhe anhand des Vorliegens eines Doppelechos zu bestimmen, das auftritt, wenn ein Sendesignal sowohl direkt als auch indirekt an einem selben Objektabschnitt reflektiert wird. Es setzt jedoch für die Identifikation solcher Doppelechos nicht auf der Ebene eines einzelnen Echosignalverlaufs an, sondern trilateriert zunächst eine Vielzahl von Reflexionspunkten anhand mehrerer Echosignale aus einer Vielzahl von Echosignalverläufen und ermittelt dann Paare aus primären und sekundären Reflexionspunkten anhand eines lagebasierten Kriteriums, wobei die primären und sekundären Reflexionspunkte nicht bzw. nicht notwendigerweise anhand identischer Empfangssignalverläufe trilateriert zu sein brauchen. Sodann wird eine hohe Objekthöhe dort bestimmt, wo ein entsprechendes Punktepaar gebildet werden konnte.

Das Verfahren bietet insbesondere den Vorteil, dass eine wesentlich höhere Anzahl von aussagekräftigen Messpunkten gewonnen werden kann. Die Konturen von Objekten in dem seitlichen Umfeld können somit besser rekonstruiert werden. Messpunkten. Insbesondere können zurückgesetzte Hindernisse in dem seitlichen Umfeld sichtbar bzw. vermessbar gemacht werden, die sich zwischen weiteren Hindernissen in dem seitlichen Umfeld befinden und von diesen verschattet werden.

Unter einem "Messpunkt" ist vorliegend insbesondere eine trilaterierte Lage eines Reflexionspunkts und eine zugehörige Objekthöhenbestimmung als "hoch" oder "niedrig" zu verstehen.

Der seitliche Ultraschall-Empfänger ist insbesondere an einer Fahrzeugseite angebracht bzw. dazu eingerichtet ist, Ultraschall-Signale bzw. Ultraschall-Signalverläufe in das seitliche Umfeld des Fahrzeugs auszusenden und von dort zu empfangen.

Das von dem Ultraschall-Sendeempfänger ausgesendete Sendesignal kann insbesondere eine Signalkeule sein, die insbesondere breit sein kann. Somit kann unter "Aussenden eines Sendesignals in einer transversalen Richtung" insbesondere zu verstehen sein, dass ein Maximum einer Signalintensität des ausgesendeten Ultraschallsignals in der transversalen Richtung ausgesendet wird. Die Signalintensität kann lateral abfallen. Das heißt, das ausgesendete Sendesignal kann in einen Winkelbereich von beispielsweise 30, 60, 90, 120 oder bis zu 180° oder jeden anderen Wert zwischen 0 und bis zu 180° ausgesendet werden, wobei das Maximum der Signalintensität in der transversalen Richtung ausgesendet wird.

Unter einem "Signal" ist vorliegend insbesondere ein Signalimpuls zu verstehen, dessen zeitliche Ausdehnung durch die zeitliche Lage eines Maximums einer Signalintensität und eine Breite des Signalimpulses um das Maximum herum definiert ist. Dagegen ist unter einem "Signalverlauf" insbesondere ein über einen längeren Zeitraum ausgesendeter bzw. empfangener Verlauf von Signalintensitäten zu verstehen. Ein Signalverlauf kann ein oder mehrere Signale bzw. Signalimpulse umfassen.

Unter einem "Echosignal" ist insbesondere eine Reflexion eines zuvor ausgesendeten Sendesignals aus dem seitlichen Umfeld des Fahrzeugs zu verstehen.

Unter einer "Vielzahl" ist vorliegend eine Anzahl von drei oder mehr, bevorzugt von 10 oder mehr, ganz besonders bevorzugt von 50 oder mehr zu verstehen. Unter "mehreren" bzw. einer "Mehrzahl" ist vorliegend eine Anzahl zwei oder mehr zu verstehen.

Insbesondere wird an einer jeweiligen Sendeposition zu einer Sendezeit ein Sendesignal bzw. Sendesignalimpuls ausgesendet. An einer jeweiligen Empfangsposition wird über einen bestimmten Empfangszeitraum hinweg ein Empfangssignalverlauf empfangen. In diesem werden sodann eine oder mehrere Echosignale identifiziert.

Das vorgeschlagene Verfahren kann insbesondere dergestalt ausgeführt werden, dass das Fahrzeug zu einer ersten Sende- und Empfangsposition fährt, stoppt, das Sendesignal ausgesendet wird, der Empfangssignalverlauf vollständig empfangen wird, sodann das Fahrzeug zu einer nächsten Sende- und Empfangsposition fährt usw. In diesem Fall bezeichnet der Begriff "Sende- und Empfangsposition" eine klare definierte Position, an der sowohl das Sendesignal gesendet als auch das Empfangssignal empfangen wird.

Das vorgeschlagene Verfahren kann insbesondere auch bei fahrendem Fahrzeug ausgeführt werden. In diesem Falle bezeichnet der Begriff "Sende- und Empfangsposition" mehrere Positionen in einem Abschnitt entlang der lateralen Richtung bzw. Fahrtrichtung des Fahrzeugs von dem Aussenden des Sendesignals bis zum Abschließen des Empfangens des Echosignalverlaufs. Auch in diesem Falle kann für jedes Sendesignal eine eindeutige Sendeposition identifiziert werden und für jedes identifizierte Echosignal kann eine Empfangsposition des jeweiligen Echosignals bestimmt werden. Dies kann insbesondere anhand einer Empfangszeit des Echosignals in Verbindung mit von einer Odometrieeinheit gelieferten Geschwindigkeitsdaten erfolgen.

Das "Identifizieren" der Anzahl Echosignale kann parallel zu dem Empfangen des jeweiligen Empfangssignalverlaufs oder nachträglich erfolgen. Insbesondere kann der jeweilige Empfangssignalverlauf zwischengespeichert werden. Das Identifizieren kann anhand des Auftretens von Maxima der Amplituden (Signalintensitäten) in dem jeweiligen Empfangssignalverlauf erfolgen. Insbesondere kann ein vorbestimmter oder variabler Schwellwert angewendet werden und ein Echosignal kann identifiziert werden, wenn die Amplitude (Signalintensität) in dem jeweiligen Empfangssignalverlauf den Schwellwert übersteigt.

Der Begriff "Reflexionspunkt" bezeichnet insbesondere einen Ort an einer Oberfläche eines Objekts in dem seitlichen Umfeld, von dem, entweder tatsächlich oder hypothetisch unter der Annahme, dass eine direkte Reflexion zurück zu dem Sendeempfänger erfolgt sei, ein Echosignal zurück zu dem Sendeempfänger reflektiert worden ist.

Unter Trilaterieren eines Reflexionspunkts ist insbesondere das Bestimmen einer Lage des Reflexionspunkts durch ein Trilaterationsverfahren zu verstehen. Insbesondere wird hierbei eine zweidimensionale Lage des Reflexionspunkts in einer von der lateralen und der transversalen Richtung aufgespannten Ebene bestimmt. Beim Trilaterieren wird insbesondere die Lage des Reflexionspunkts anhand der zeitlichen Differenzen zwischen dem Aussenden des jeweiligen Sendesignals und dem Empfangen des jeweiligen Echosignals sowie anhand eines Abstands zwischen den zu dem jeweiligen Sendesignal bzw. dem Echosignal zugehörigen Sende- und Empfangspositionen bestimmt. Insbesondere erlaubt die gemessene zeitliche Differenz zwischen dem Senden eines Sendesignals und dem Empfangen eines zeitlich ersten Echosignals die Bestimmung einer Entfernung von der zugehörigen Sende- und Empfangsposition zu dem Reflexionspunkt durch Multiplizieren der halben zeitlichen Differenz mit der Schallgeschwindigkeit. Die Lage des Reflexionspunkts ergibt sich dann insbesondere als Schnittpunkt eines Kreises um die erste Sende- und Empfangsposition mit der ersten bestimmten Entfernung als Radius mit einem Kreis um die zweite Sende- und Empfangsposition mit der zweiten bestimmten Entfernung als Radius.

Unter "Bilden einer Reflexionspunktmenge" ist insbesondere zu verstehen, dass wiederholt je zwei Echosignale aus zwei, grundsätzlich beliebigen, Empfangssignalverläufen ausgewählt und ein zugehöriger Reflexionspunkt trilateriert wird. Sodann wird mindestens die trilaterierte Lage des Reflexionspunkts in der Reflexionspunktmenge gespeichert. Die Reflexionspunktmenge kann insbesondere als Datenstruktur, wie beispielsweise als Liste, Array oder Graph, in einer flüchtigen oder nichtflüchtigen Speichervorrichtung werden.

Die je zwei Echosignale können beispielsweise aus an benachbarten Sende- und Empfangspositionen empfangenen Empfangssignalverläufen ausgewählt werden. In diesem Fall ergibt sich insbesondere der Vorteil, dass einfach zugeordnet werden kann, welche zwei Echosignale aus den benachbarten Sende- und Empfangspositionen jeweils miteinander zu trilaterieren sind. Die je zwei Echosignale können jedoch auch aus an nicht direkt benachbarten Sende- und Empfangspositionen ausgewählt werden.

Unter einem "primären Reflexionspunkt" ist insbesondere ein Reflexionspunkt der Reflexionspunktmenge zu verstehen, an dem eine direkte Reflexion zurück zu dem Ultraschall-Sendeempfänger erfolgte. Unter einem "sekundären Reflexionspunkt" ist insbesondere ein Reflexionspunkt der Reflexionspunktmenge zu verstehen, der trilateriert wird, wenn in dem seitlichen Umfeld zwei Reflexionen erfolgten, bevor das Echosignal zu dem Ultraschall-Sendeempfänger zurückkehrt. Der sekundäre Reflexionspunkt ist somit insbesondere ein virtueller Reflexionspunkt. Denn im Regelfalle erfolgte keine der zwei Reflexionen an der trilaterierten Lage des sekundären Reflexionspunkts. Vielmehr gibt der virtuelle, sekundäre Reflexionspunkt insbesondere eine Lage an, an der ein hypothetisches direkt reflektiertes Echosignal reflektiert worden wäre, wenn es zu einem gleichen Zeitpunkt empfangen wird wie das indirekt reflektierte Echosignal.

Bei dem "Bilden mehrerer Paare" aus jeweiligen primären und sekundären Reflexionspunkten kann insbesondere nacheinander eine Anzahl erste Reflexionspunkte aus der Reflexionspunktmenge ausgewählt werden. Für jeden ersten Reflexionspunkt kann geprüft werden, ob sich ein zweiter Reflexionspunkt in der Reflexionspunktmenge findet, der das mindestens lagebasierte Kriterium erfüllt. Die Suche in der Reflexionspunktmenge nach einem solchen zweiten Reflexionspunkt kann sich grundsätzlich auf die gesamte Reflexionspunktmenge erstrecken, auf einen ausgewählten Teil davon und insbesondere auch auf Reflexionspunkte, die anhand Echosignalen aus anderen Empfangssignalverläufen trilateriert wurden als der erste Reflexionspunkt. Falls ein solcher zweiter Reflexionspunkt gefunden wird, kann insbesondere bestimmt bzw. vermutet werden, dass es sich bei dem ersten Reflexionspunkt um einen primären Reflexionspunkt und bei dem zweiten Reflexionspunkt um einen zugehörigen virtuellen, durch mehrfache Reflexion des Sendesignals an einem selben Objektabschnitt entstandenen, sekundären Reflexionspunkt handelt.

Unter "einem selben Objektabschnitt" ist hierbei insbesondere ein Abschnitt eines selben Objekts in dem seitlichen Umfeld zu verstehen. Der Objektabschnitt ist insbesondere ein Abschnitt, der auf demselben Objekt in dem seitlichen Umfeld von einer Signalkeule des Sendesignals beschallt wird.

Demgemäß kann in Schritt e) insbesondere bestimmt werden, dass sich an der trilaterierten Lage jedes solchermaßen als primärer Reflexionspunkt eines Reflexionspunktpaars bestimmten Reflexionspunkt ein hohes Objekt befindet, und dass sich an der trilaterierten Lage jedes Reflexionspunkts der Reflexionspunktmenge, der nicht als primärer oder sekundärer Reflexionspunkt eines Reflexionspunktpaars identifiziert wurde, ein niedriges Objekt befindet. Darüber hinaus kann insbesondere bestimmt werden, dass sich an den trilaterierten Lagen derjenigen der Reflexionspunkte der Reflexionspunktmenge, die als sekundäre Reflexionspunkte eines Reflexionspunktpaars identifiziert wurden, kein Objekt bzw. wenigstens keine reflektierende Oberfläche eines Objekts befindet.

Unter "hoch" ist hierbei insbesondere eine Höhe zu verstehen, bei der ein Objekt bzw. Hindernis in dem seitlichen Umfeld beim Einparken nicht überfahren oder tangiert werden darf. Unter "niedrig" ist insbesondere eine Höhe zu verstehen, bei der ein Objekt, bzw. Hindernis in dem seitlichen Umfeld beim Einparken überfahren werden darf, also insbesondere und beispielsweise eine typische Höhe einer Bordsteinkante von beispielsweise maximal 15 cm.

Es sei noch angemerkt, dass der Begriff "primärer Reflexionspunkt" im Folgenden und in den Ansprüchen - sowohl in der Bedeutung "Reflexionspunkt, von dem bereits bestimmt wurde, dass es sich um einen primären Reflexionspunkt eines Reflexionspunktpaars handelt" benutzt wird (insbesondere wenn Schritt e) thematisiert wird) als auch in der Bedeutung "erster Reflexionspunkt, zu dem ein passender, das Kriterium erfüllender, zweiter Reflexionspunkt gesucht wird, um zu bestimmen, ob es sich bei dem ersten Reflexionspunkt um einen primären Reflexionspunkt eines Reflexionspunktpaars handelt" benutzt wird (insbesondere, wenn Schritt d) thematisiert wird).

Unter "Reflexionspunktpaar" und/oder unter einem "Doppelecho" ist hier und im Folgenden ein Paar aus einem primären und einem zugehörigen sekundären Reflexionspunkt zu verstehen, für die angenommen wird, dass sie ein direkt reflektiertes Echosignal und ein an einem selben Objektabschnitt und einem weiteren Reflexionspunkt mehrfach reflektiertes Echosignal repräsentieren bzw. anhand solcher Echosignale trilateriert wurden.

Gemäß einer Ausführungsform umfasst das Kriterium in Schritt e), dass ein jeweiliger sekundärer Reflexionspunkt innerhalb eines relativ zu dem jeweiligen primären Reflexionspunkt definierten geometrischen Suchfensters angeordnet ist.

Das Suchfenster kann insbesondere in einer zweidimensionalen Ebene definiert sein, die von der lateralen und der transversalen Richtung aufgespannt ist.

Eine Ausdehnung des geometrischen Suchfensters in transversaler Richtung kann auf eine Strecke begrenzt sein, die Ultraschall innerhalb einer bei Auftreten eines Doppelechos zu erwarteten zeitlichen Differenz zwischen dem Eintreffen des direkt reflektierten und des mehrfach reflektierten Echosignals) begrenzt sein. Insbesondere kann die Ausdehnung des geometrischen Suchfensters in transversaler Richtung auf eine Strecke begrenzt sein, die Ultraschall innerhalb vorzugsweise von 2 ms, besonders bevorzugt von 1 ms, zurücklegt.

Eine Ausdehnung des geometrischen Suchfensters in lateraler Richtung kann auf einen Abstand zwischen zwei Sende- und Empfangspositionen (lateralen Abstand zwischen zwei Messorten) begrenzt sein.

Die räumliche Lage eines zweiten Reflexionspunkts in dem solchermaßen anhand eines ersten Reflexionspunkts definierten geometrischen Suchfensters kann eine notwendige Bedingung für das Vorliegen eines Reflexionspunktpaars sein. Durch Einschränken der Suche des sekundären Reflexionspunkts auf ein derart definiertes geometrisches Suchfenster kann zudem die Anzahl der Rechenoperationen zum Durchführen der Suche verringert werden.

Gemäß einer weiteren Ausführungsform umfasst das geometrische Suchfenster mindestens einen Reflexionspunkt, der anhand von jeweiligen zwei Echosignalen trilateriert wurde, die in anderen Empfangssignalverläufen identifiziert wurden als die zwei Echosignale, anhand derer der primäre Reflexionspunkt trilateriert wurde.

Vorzugsweise kann das geometrische Suchfenster darüber hinaus auch mindestens einen Reflexionspunkt umfassen, der anhand von jeweiligen zwei Echosignalen trilateriert wurde, die in denselben Empfangssignalverläufen identifiziert wurden wie die zwei Echosignale, anhand derer der primäre Reflexionspunkt trilateriert wurde, jedoch von diesen verschieden sind.

Das Vermessen eines seitlichen Umfelds eines Fahrzeugs kann von zahlreichen Faktoren beeinträchtigt werden, insbesondere von Rauschen, von schwer zu interpretierenden Empfangssignalen, von verschatteten Objekten oder von Vorgängen in dem seitlichen Umfeld usw. So kann es geschehen, dass nicht alle Echosignale in einem Echosignalverlauf korrekt identifizierbar sind bzw. nicht alle davon korrekt identifiziert werden. Indem auch in anderen Empfangssignalverläufen nach passenden sekundären Echos (d. h. nach Echosignalen, anhand derer sich ein das mindestens lagebasierte Kriterium erfüllender sekundärer Reflexionspunkt trilaterieren lässt) gesucht wird, können trotz der schwierigen Messbedingungen mehr aussagekräftige Messpunkte erzeugt werden.

Gemäß einer weiteren Ausführungsform weitet sich das geometrische Suchfenster in der transversalen Richtung mit zunehmendem Abstand zu dem primären Reflexionspunkt lateral auf.

Insbesondere kann das geometrische Suchfenster am Ort des primären Reflexionspunkts punktförmig sein und sich in der transversalen, insbesondere von den Messorten wegführenden, Richtung dreiecks- oder kreissegmentförmig aufweiten.

Durch eine derartige Ausgestaltung des geometrischen Suchfensters kann bei Verwendung eines lediglich lagebasierten Kriteriums beim Suchen nach passenden sekundären Reflexionspunkten eine Wahrscheinlichkeit dafür verringert werden, dass fälschlicherweise zwei primäre Reflexionspunkte als Reflexionspunktpaar aus einem primären und einem sekundären Reflexionspunkt identifiziert werden.

Gemäß einer weiteren Ausführungsform wird unter mehreren Reflexionspunkten, die das Kriterium in Bezug auf einen jeweiligen primären Reflexionspunkt erfüllen, der zu dem primären Reflexionspunkt nächstliegende Reflexionspunkt als der sekundäre Reflexionspunkt des zu bildenden Paars gewählt.

Insbesondere kann nur und ausschließlich der zu dem primären Reflexionspunkt nächstliegende Reflexionspunkt als sekundärer Reflexionspunkt eines Reflexionspunktpaars mit dem primären Reflexionspunkt identifiziert werden. Weitere zweite Reflexionspunkte, die auch das Kriterium erfüllen werden, werden somit nicht "verbraucht", sie können nachfolgend weiterhin als potentielle primäre Reflexionspunkte für die Suche nach passenden sekundären Reflexionspunkten ausgewählt werden. Somit kann je nach der zu vermessenden Situation vorteilhafterweise die Anzahl aussagekräftiger Messpunkte noch weiter erhöht werden.

Gemäß einer weiteren Ausführungsform werden die in dem jeweiligen Empfangssignalverlauf identifizierten Echosignale gemäß ihrer zeitlichen Abfolge geordnet, und in Schritt c) werden Echosignale gleicher Ordnung aus an benachbarten Empfangspositionen empfangenen Echosignalverläufen zum Trilaterieren eines jeweiligen Reflexionspunkts benutzt.

Unter "Ordnung" ist hierbei insbesondere eine Zahl zu verstehen, die die Position des Echosignals in der zeitlichen Abfolge von Echosignalen angibt, also "1" für das zeitlich erste Echosignal in einem Echosignalverlauf, "2" für das zeitlich zweite Echosignal in demselben Echosignalverlauf und so weiter.

Grundsätzlich ist denkbar, die Anzahl an Reflexionspunkten in der Reflexionspunktmenge und damit die Anzahl von Messpunkten noch weiter zu erhöhen werden, indem jedes beliebige Echosignal in einem Empfangssignalverlauf mit jedem beliebigen Echosignal in einem zweiten Echosignalverlauf kombiniert wurde, um einen zugehörigen Reflexionspunkt zu generieren. Gemäß der vorliegenden Ausführungsform werden jedoch nur zeitlich erste Echosignale mit zeitlich ersten Echosignalen, zeitlich zweite Echosignale mit zeitlich zweiten Echosignalen usw. kombiniert, um einen jeweiligen Reflexionspunkt zu trilaterieren. Somit kann vorteilhafterweise eine zu verarbeitende Datenmenge reduziert und dennoch gleichzeitig eine Aussagekraft der zu verarbeitenden Datenmenge erhöht werden.

Gemäß einer weiteren Ausführungsform umfasst das Kriterium in Schritt e), dass die Ordnung der Echosignale, anhand derer der sekundäre Reflexionspunkt trilateriert wurde, um eins höher ist als die Ordnung der Echosignale, anhand derer der primäre Reflexionspunkt trilateriert wurde.

Somit ist rein beispielhaft denkbar, dass ein anhand zeitlich zweiter Echosignale von zwei Empfangssignalverläufen trilaterierter Reflexionspunkt mit einem anhand zeitlich dritter Echosignale derselben oder anderer Empfangssignalverläufe trilaterierten Reflexionspunkt zu einem Reflexionspunktpaar kombiniert wird. Jedoch kann mit dem Kriterium der vorliegenden Ausführungsform der anhand der zeitlich zweiten Echosignale trilaterierte Reflexionspunkt nicht mit einem anhand zeitlich erster, anhand zeitlich vierter oder anhand zeitlich noch späterer Echosignale derselben oder anderer Empfangssignalverläufe kombiniert werden.

Demgemäß kann vorteilhafterweise eine zu verarbeitende Datenmenge reduziert und gleichzeitig eine Aussagekraft der zu verarbeitenden Datenmenge erhöht werden.

Gemäß einer weiteren Ausführungsform umfasst das Kriterium in Schritt e), dass der sekundäre Reflexionspunkt weiter von dem Sende- und Empfangspunkt des zu dem primären Reflexionspunkt zugehörigen Echosignals entfernt ist als der primäre Reflexionspunkt.

Demgemäß kann vorteilhafterweise eine Wahrscheinlichkeit dafür verringert werden, dass zwei in lateraler Richtung im Wesentlichen nebeneinanderliegende primäre Reflexionspunkte fälschlicherweise als Reflexionspunktpaar aus einem primären und einem sekundären Reflexionspunkt identifiziert werden.

Gemäß einer weiteren Ausführungsform umfasst das Kriterium in Schritt e), dass ein Abstand zwischen dem primären Reflexionspunkt und dem sekundären Reflexionspunkt kleiner als ein vorbestimmter Maximalabstand ist.

Der vorbestimmte Maximalabstand kann unter Berücksichtigung einer zu erwartenden Verlängerung des Laufwegs eines mehrfach reflektierten Echosignals gegenüber einem direkt reflektierten Echosignal bestimmt werden. Die zu erwartende Laufwegsverlängerung ist insbesondere abhängig von einer Einbauhöhe des Ultraschall-Sendeempfängers und eines zu erwartenden Abstands zwischen dem Fahrzeug und dem zu vermessenden Objekt. Zum Beispiel ergibt eine Laufwegsverlängerung von 50 cm unter Berücksichtigung der Schallgeschwindigkeit von 343 m/s eine zeitliche Differenz von ca. 1,5 ms. Der vorbestimmte Maximalabstand kann in einem Bereich zwischen 1 und 2 ms und vorzugsweise zu 2 ms gewählt werden.

Somit kann eine Wahrscheinlichkeit dafür verringert werden, dass aus zwei primären Reflexionspunkten an verschiedenen Objekten fälschlicherweise ein Reflexionspunktpaar aus einem primären und einem vermeintlichen sekundären Reflexionspunkt gebildet wird.

Gemäß einer weiteren Ausführungsform umfasst das Kriterium in Schritt e), dass eine Signalstärke mindestens eines Echosignals, anhand dessen der sekundäre Reflexionspunkt trilateriert wurde, um nicht mehr als einen vorbestimmten Faktor gegenüber einer Signalstärke mindestens eines Echosignals, anhand dessen der primäre Reflexionspunkt trilateriert wurde, reduziert ist.

Insbesondere ist aufgrund des längeren Signalwegs bei einer Mehrfachreflexion und aufgrund dessen, dass das Sendesignal eine Signalkeule aufweist, also aufgeweitet ist, zu erwarten, dass die zu einem virtuellen, sekundären Reflexionspunkt gehörigen Echosignale weniger intensiv sind, als die zu dem zugehörigen primären Reflexionspunkt gehörigen Echosignale.

Durch Berücksichtigung der Signalintensitäten kann eine Wahrscheinlichkeit dafür verringert werden, dass aus zwei primären Reflexionspunkten an verschiedenen Objekten bzw. Objektabschnitten fälschlicherweise ein Reflexionspunktpaar aus einem primären und einem vermeintlichen sekundären Reflexionspunkt gebildet wird.

Gemäß einer weiteren Ausführungsform werden in der Reflexionspunktmenge für einen jeweiligen Reflexionspunkt die trilaterierte Lage des Reflexionspunkts sowie optional ein oder mehrere Attribute gespeichert, und die Schritte e) und f) werden nach Abschluss der Schritte a), b) und c) anhand der in der gespeicherten Reflexionspunktmenge gespeicherten Lagen und ggf. der gespeicherten Attribute der Reflexionspunkte durchgeführt.

Dadurch, dass zunächst eine Vielzahl von Ultraschallmessungen durchgeführt und die gesamte Reflexionspunktmenge gebildet wird und erst anschließend nach Reflexionspunktpaaren gesucht wird, kann es vorteilhafterweise möglich sein, weitere Messpunkte zu generieren, die unerkannt geblieben wären, wenn Reflexionspunktpaare nur aus Echosignalen von jeweils zwei Messungen gebildet würden.

Insbesondere in der Variante, in der neben den Lagen auch weitere Attribute in der Reflexionspunktmenge gespeichert werden, kann es möglich sein, das Kriterium, das ein zweiter Reflexionspunkt erfüllen muss, um als zu einem primären Reflexionspunkt zugehöriger sekundärer Reflexionspunkt ausgewählt zu werden, nicht allein auf einer relativen Lage des primären und des potentiellen sekundären Reflexionspunkt zu basieren, sondern das Kriterium auch auf weiteren Sachverhalten zu basieren und damit die Aussagekraft der generierten Messpunkte zu erhöhen.

Ein Attribut für einen jeweiligen Reflexionspunkt kann insbesondere eines oder mehrere der folgenden Attribute umfassen: 1. Ordnung der Echosignale in dem jeweiligen Empfangssignalverlauf, anhand derer der Reflexionspunkt trilateriert wurde; 2. Sende- und Empfangsposition eines oder beider der Empfangssignalverläufe mit den Echosignalen, anhand derer der Reflexionspunkt trilateriert wurde; 3. Signalstärke eines oder beider der Echosignale, anhand derer der Reflexionspunkt trilateriert wurde.

Unter einem zweiten Aspekt wird ein Verfahren zum Einparken eines Fahrzeugs vorgeschlagen, das mit mindestens einem seitlichen Ultraschall-Sendeempfänger und einem Parkassistenzsystem versehen ist. Das Verfahren des zweiten Aspekts umfasst: Durchführen des Verfahrens des ersten Aspekts oder einer Ausführungsform davon, um die Lagen und die Objekthöhen an einer Vielzahl von primären Reflexionspunkten in dem seitlichen Umfeld des Fahrzeugs zu bestimmen; Bestimmen einer Parklücke in dem seitlichen Umfeld, die frei von Reflexionspunkten mit einer als "hoch" bestimmten Objekthöhe ist; und Einparken des Fahrzeugs in die Parklücke mit Hilfe des Parkassistenzsystems.

Das Parkassistenzsystem kann dazu eingerichtet sein, Hinweise bzw. Anweisungen an einen menschlichen Fahrer des Fahrzeugs zum Ausführen entsprechender Lenk- und Fahrvorgänge zu geben. Auch kann das Parkassistenzsystem insbesondere zum teilautonomen oder vollautonomen Fahren des Fahrzeugs eingerichtet sein. Unter teilautonomem Fahren wird beispielsweise verstanden, dass das Parkassistenzsystem eine Lenkvorrichtung und/oder eine Fahrstufenautomatik steuert. Unter vollautonomem Fahren wird beispielsweise verstanden, dass das Parkassistenzsystem zusätzlich auch eine Antriebseinrichtung und eine Bremseinrichtung steuert.

Das Parkassistenzsystem kann insbesondere veranlassen, dass das Fahrzeug mit einer Geschwindigkeit von vorzugsweise nicht mehr als 40 km/h, besonders bevorzugt nicht mehr als 30 km/h und ganz besonders bevorzugt in Schrittgeschwindigkeit entlang einer Fahrtrichtung parallel zu dem seitlichen Umfeld des Fahrzeugs, in dem eine Parklücke vermutet wird, vorbeifährt und dabei das vorgeschlagene Verfahren des zweiten Aspekts ausgeführt wird.

Die durch Durchführen des Verfahrens des ersten Aspekts ermittelten mehreren Messpunkte (Lagen und Objekthöhen) können optional auch zusammengefasst bzw. mit einem Cluster-Verfahren geclustert werden. Dabei können anhand statistischer Kriterien Fehlbestimmungen bzw. weniger relevante Bestimmungen ausgefiltert werden. Hierbei kann insbesondere eine Häufung von Messpunkten als ein Kriterium für Messpunkte von hoher Aussagekraft gewertet werden, während vereinzelt auftretende Messpunkte als irrelevant aussortiert werden können. Die vorgeschlagenen Verfahren bieten insbesondere den Vorteil, eine höhere Anzahl von Messpunkten zu generieren, was die Anwendbarkeit statistischer Methoden begünstigen kann.

Unter einer Parklücke kann insbesondere ein Bereich in dem seitlichen Umfeld des Fahrzeugs verstanden werden, in dem keine als "hoch" bestimmten Objekte angeordnet sind, und dessen Abmessungen größer als die Abmessungen des Fahrzeugs sind, so dass ein paralleles, schräges oder queres Einparken des Fahrzeugs in den freien Bereich möglich ist.

Die Einparktrajektorie kann mathematisch und/oder unter Einsatz maschinellen Lernens, eines trainierten neuronalen Netzwerks oder dergleichen ermittelt werden.

Das Fahren des Fahrzeugs entlang der Einparktrajektorie kann unter Verwendung einer PID-Steuerung oder dergleichen veranlasst werden. Während des Fahrens können weitere Ultraschallmessungen gemäß dem vorgeschlagenen Verfahren des ersten Aspekts oder weitere Messungen mit anderen Arten von Sensoren erfolgen, um die gewonnen Informationen über das seitliche Umfeld laufend zu aktualisieren.

Unter einem dritten Aspekt wird ein Computerprogrammprodukt vorgeschlagen, das Befehle umfasst, die bei der Ausführung durch eine Computervorrichtung diese dazu veranlassen, das Verfahren gemäß dem ersten oder zweiten Aspekt auszuführen.

Ein Computerprogrammprodukt, wie z. B. ein Computerprogramm-Mittel, kann beispielsweise als Speichermedium, wie z. B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die Computervorrichtung kann insbesondere Teil des Parkassistenzsystems sein. Die Computervorrichtung kann ein eingebettetes Gerät, ein Steuergerät (ECU - Electronic Control Unit) des Fahrzeugs, ein Mikrocontroller, ein Industrie-PC oder dergleichen sein.

Unter einem vierten Aspekt wird eine Messvorrichtung für ein Parkassistenzsystem eines mit mindestens einem seitlichen Ultraschall-Sendeempfänger versehenen Fahrzeugs vorgeschlagen. Die Messvorrichtung ist zum Vermessen eines seitlichen Umfelds des Fahrzeugs eingerichtet und umfasst: a) eine erste Einheit, die dazu eingerichtet ist, den mindestens einen Ultraschall-Sendeempfänger an einer Vielzahl Sende- und Empfangspositionen entlang einer lateralen Fahrtrichtung des Fahrzeugs zum Aussenden eines jeweiligen Sendesignals in einer transversalen Richtung quer zu der Fahrtrichtung des Fahrzeugs und Empfangen eines jeweiligen aus dem seitlichen Umfeld reflektierten Empfangssignalverlaufs anzusteuern; b) eine zweite Einheit, die dazu eingerichtet ist, eine Anzahl Echosignale in dem jeweiligen Empfangssignalverlauf zu identifizieren; c) eine dritte Einheit, die dazu eingerichtet ist, eine Reflexionspunktmenge zu bilden, indem sie mehrfach anhand von jeweils zwei Empfangssignalverläufen aus der Vielzahl Empfangssignalverläufe und anhand von jeweils einem Echosignal aus jedem der zwei Empfangssignalverläufe einen jeweiligen Reflexionspunkt in der seitlichen Umgebung trilateriert und in der Reflexionspunktmenge speichert; d) eine vierte Einheit, die dazu eingerichtet ist, mehrerer Paare aus einem jeweiligen primären Reflexionspunkt und einem jeweiligen sekundären Reflexionspunkt der Reflexionspunktmenge zu bilden, die sie anhand eines mindestens lagebasierten Kriteriums als Reflexionspunkte einer direkten bzw. indirekten Reflexion an einem selben Objektabschnitt in dem seitlichen Umfeld identifiziert; e) eine fünfte Einheit, die dazu eingerichtet ist, eine Objekthöhe an einem jeweiligen der Reflexionspunkte in dem seitlichen Umfeld als hoch zu bestimmen, wenn der betreffende Reflexionspunkt ein primärer Reflexionspunkt eines der gebildeten Paare ist, und als niedrig zu bestimmen, wenn die vierte Einheit kein Paar mit dem betreffenden Reflexionspunkt als primärem oder sekundärem Reflexionspunkt gebildet hat.

Die für das Verfahren des ersten Aspekts beschriebenen Merkmale, Vorteile und Ausführungsformen gelten entsprechend auch für die Messvorrichtung des vierten Aspekts.

Eine jeweilige der vorliegend genannten Einheiten kann hardwaretechnisch und/oder softwaretechnisch implementiert sein. Bei einer hardwaretechnischen Implementierung kann die entsprechende Einheit zum Beispiel als Computer oder als Mikroprozessor ausgebildet sein.

Bei einer softwaretechnischen Implementierung kann die entsprechende Einheit als Computerprogrammprodukt, als eine Funktion, als eine Routine, als ein Algorithmus, als Teil eines Programmcodes oder als ausführbares Objekt ausgebildet sein. Ferner kann jede der vorliegend genannten Einheiten auch als Teil eines übergeordneten Steuerungssystems des Fahrzeugs, wie beispielsweise ein Steuergerät (ECU: Engine Control Unit), ausgebildet sein.

Unter einem fünften Aspekt wird ein Fahrzeug mit einem Parkassistenzsystem vorgeschlagen, das zum halb- oder vollautonomen Fahren des Fahrzeugs eingerichtet ist, wobei das Fahrzeug und/oder das Parkassistenzsystem die Messvorrichtung des vierten Aspekts umfasst.

Das Fahrzeug ist beispielsweise ein Personenkraftwagen oder Lastkraftwagen. Das Fahrzeug umfasst vorzugsweise eine Anzahl an Sensoreinheiten, die zum Erfassen des Fahrzustands des Fahrzeugs und zum Erfassen einer Umgebung des Fahrzeugs eingerichtet sind. Beispiele für derartige Sensoreinheiten des Fahrzeugs sind Bildaufnahmeeinrichtungen, wie eine Kamera, ein Radar (engl. radio detection and ranging) oder auch ein Lidar (engl. light detection and ranging), Ultraschallsensoren, Ortungssensoren, Radwinkelsensoren und/oder Raddrehzahlsensoren. Die Sensoreinheiten sind insbesondere jeweils zum Ausgeben eines Sensorsignals eingerichtet, beispielsweise an das Parkassistenzsystem, welches das teil- oder vollautonome Fahren in Abhängigkeit der erfassten Sensorsignale durchführt.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung.

Im Weiteren wird die Erfindung anhand von bevorzugten Ausführungsbeispielen unter Bezugnahme auf die beigefügten Figuren näher erläutert.
- Fig. 1: zeigt eine schematische Ansicht eines Fahrzeugs aus einer Vogelperspektive;
- Fig. 2: zeigt eine schematische Ansicht eines Ultraschall-Sendeempfängers aus der Vogelperspektive;
- Fig. 3: zeigt eine schematische Ansicht des Ultraschall-Sendeempfängers bei Betrachtung entlang einer Fahrzeug-Längsrichtung;
- Fig. 4: zeigt eine Auftragung einer Intensität eines von dem Ultraschall-Sendeempfänger ausgesendete Sendesignals;
- Fig. 5: zeigt eine Auftragung eines Empfangssignalverlaufs;
- Fig. 6: zeigt eine schematische Darstellung zur Veranschaulichung des Ausbildens eines Doppelechos im Falle eines hohen Hindernisses;
- Fig. 7: zeigt eine schematische Darstellung zur Veranschaulichung des Ausbleibens eines Doppelechos im Falle eines niedrigen Hindernisses;
- Fig. 8: zeigt eine schematische Darstellung zur Veranschaulichung des Trilaterierens;
- Fig. 9: zeigt ein Flussablaufdiagramm eines Verfahrens zum Vermessen eines seitlichen Umfelds des Fahrzeugs aus Fig. 1 gemäß einem Ausführungsbeispiel;
- Fig. 10: zeigt ein funktionales Blockdiagramm einer entsprechenden Messvorrichtung gemäß dem Ausführungsbeispiel;
- Fig. 11: zeigt ein Fahrzeug, das an einem seitlichen Umfeld vorbeifährt und ein Verfahren gemäß dem Ausführungsbeispiel ausführt;
- Fig. 12: zeigt eine zweidimensionale Auftragung nicht trilaterierter Reflexionspunkte;
- Fig. 13: zeigt eine zweidimensionale Auftragung einer Reflexionspunktmenge aus trilaterierten Reflexionspunkten gemäß dem Ausführungsbeispiel; und
- Fig. 14: zeigt einen Ausschnitt aus einer Reflexionspunktmenge zur Erläuterung von Kriterien für die Reflexionspaarbildung gemäß Ausführungsbeispielen.

In den Figuren sind gleiche oder funktionsgleiche Elemente mit denselben Bezugszeichen versehen worden, sofern nichts anderes angegeben ist.

Es werden beispielhaft grundlegende Konfigurationen und Prinzipien der Abstands-, Lagen- und Höhenbestimmung in einem seitlichen Umfeld eines Fahrzeugs erläutert, die für alle Ausführungsformen und Ausführungsbeispiele der Erfindung gelten können.

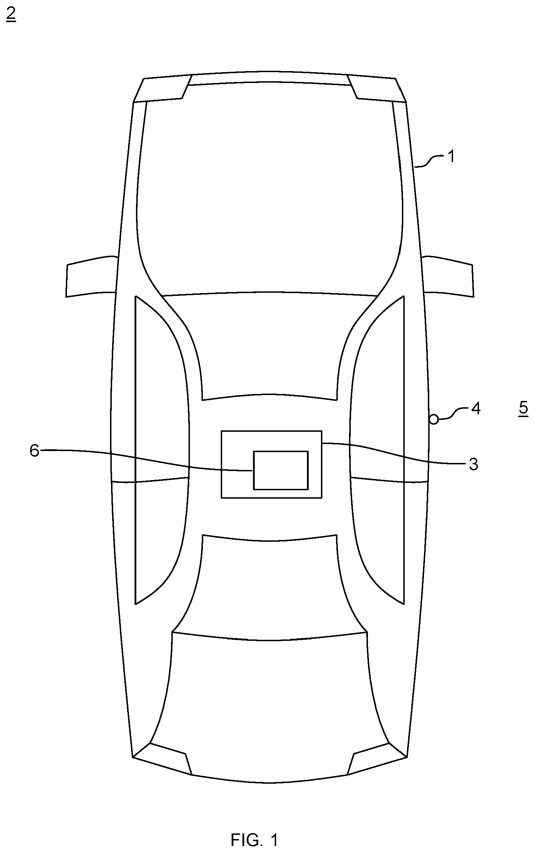

Fig. 1 zeigt eine schematische Ansicht eines Fahrzeugs 1 aus einer Vogelperspektive. Das Fahrzeug 1 ist beispielsweise ein Auto, das in einem Umfeld 2 angeordnet ist. Das Auto 1 weist ein Parkassistenzsystem 3 auf, das beispielsweise als ein Steuergerät ausgebildet ist. Zudem sind an dem Auto 1 eine Mehrzahl an Umgebungssensoreinrichtungen (nicht alle sind gezeigt) angeordnet. Die Mehrzahl Umgebungssensoreinrichtungen umfasst insbesondere einen seitlichen Ultraschall-Sendeempfänger 4. Der Ultraschall-Sendeempfänger 4 ist dazu eingerichtet, ein Ultraschall-Sendesignal in das Umfeld 2 und speziell in einen als seitliches Umfeld 5 bezeichneten Bereich des Umfelds 2 des Fahrzeugs 1 auszusenden und einen Ultraschall-Empfangssignalverlauf aus dem seitlichen Umfeld 5 zu empfangen. Das Parkassistenzsystem 3 umfasst insbesondere eine Messvorrichtung 6. Die Messvorrichtung 6 ist dazu eingerichtet, unter Verwendung des Ultraschall-Sendeempfängers 4 gemäß dem vorgeschlagenen Verfahren die Lagen und Höhen von Objekten (Hindernissen) in dem seitlichen Umfeld 5 zu bestimmen und an das Parkassistenzsystem 3 auszugeben. Mittels der von den Umgebungssensoreinrichtungen erfassten Sensorsignale und den von der Messvorrichtung 3 bestimmten Lagen und Höhen ist das Parkassistenzsystem 2 in der Lage, das Auto 1 teilautonom oder auch vollautonom zu fahren und insbesondere in eine Parklücke (nicht gezeigt) in dem seitlichen Umfeld 5 einzuparken. Neben dem in der Fig. 1 dargestellten Ultraschall-Sendeempfänger 4 kann vorgesehen sein, dass das Fahrzeug 1 weitere Sensoreinrichtungen aufweist. Beispiele hierfür sind weitere Ultraschall-Sendeempfänger, optische Sensoren, visuelle Kameras, ein Radar und/oder ein Lidar, ein Mikrofon, ein Beschleunigungssensor, eine Antenne mit gekoppeltem Empfänger zum Empfangen von elektromagnetisch übertragbaren Datensignalen, und dergleichen mehr.

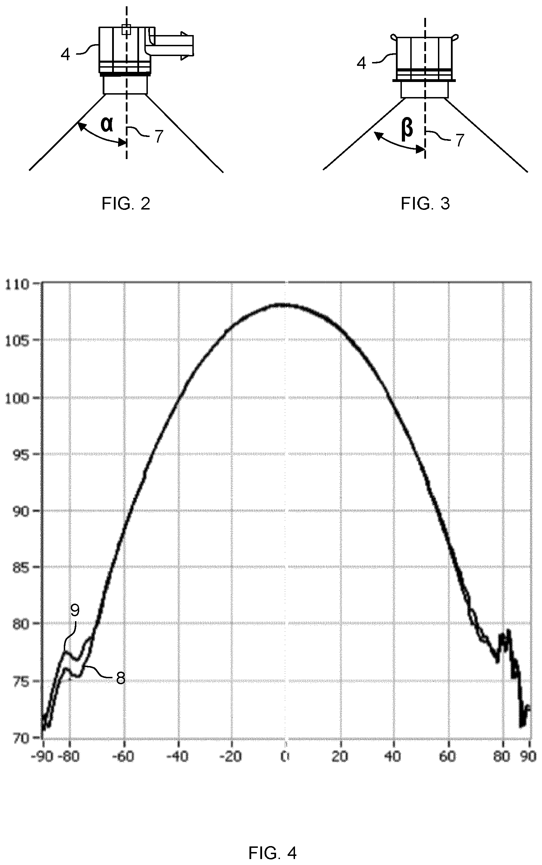

Fig. 2 zeigt eine schematische Ansicht eines Ultraschall-Sendeempfängers 4 aus der Vogelperspektive, Fig. 3 zeigt eine schematische Ansicht des Ultraschall-Sendeempfängers 4 bei Betrachtung entlang einer Fahrzeug-Längsrichtung, und Fig. 4 zeigt eine Auftragung einer Intensität eines von dem Ultraschall-Sendeempfänger 4 ausgesendeten Sendesignals.

Der Ultraschall-Sendeempfänger 4 sendet ein Sendesignal entlang einer transversalen Achse 7 aus. Die transversale Achse 7 ist, wenn der Ultraschall-Sendeempfänger 4 als seitlicher Ultraschall-Sendeempfänger 4 an einer Seite des Fahrzeugs 1 (Fig. 1) angeordnet ist, quer zu dem Fahrzeug 1 (Fig. 1), d. h. quer zu einer Front-Heck-Richtung bzw. Längsrichtung des Fahrzeugs 1 (Fig. 1), angeordnet. Das ausgesendete Sendesignal umfasst eine Signalkeule, d. h., es weist in horizontaler Richtung einen Öffnungswinkel α und in vertikaler Richtung einen Öffnungswinkel β auf. Der von den Öffnungswinkeln α bzw. β aufgespannte Kegel beschreibt eine dreidimensionale Fläche, bei welcher eine Signalintensität des ausgestrahlten Ultraschall-Sendesignals um einen vorbestimmten Faktor gegenüber der maximalen Signalintensität auf der transversalen Achse reduziert ist. In Fig. 4 ist auf der x-Achse ein Winkel gegen die transversale Achse und auf der y-Achse eine Signalintensität (Schalldruckpegel in dB) aufgetragen. Die Kurve 8 beschreibt einen Verlauf der Signalintensität in einer horizontalen Ebene und die Kurve 9 den Verlauf der Signalintensität einer vertikalen Ebene, wobei die horizontale Ebene und die vertikale Ebene jeweils durch die transversale Achse 7 verlaufen.

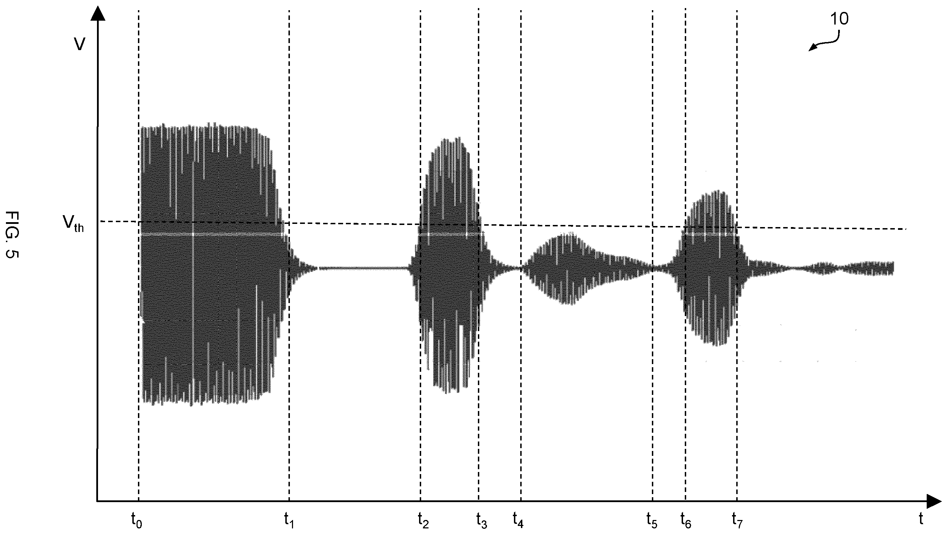

Es wird auf Fig. 1 bis Fig. 5 Bezug genommen. Fig. 5 zeigt eine Auftragung eines Empfangssignalverlaufs 10, der von dem Ultraschall-Sendeempfänger 4 in Reaktion auf das Aussenden des Sendesignals empfangen wird. Auf der horizontalen Achse ist die Zeit t aufgetragen, und auf der vertikalen Achse ist eine von dem Ultraschall-Sendeempfänger 4 ausgegebene Sensorspannung aufgetragen, die eine von dem Ultraschall-Sendeempfänger 4 erfassten Empfangssignalintensität, d. h., einen erfassten Schalldruck, angibt.

Zum Zeitpunkt t₀ sendet der Ultraschall-Sendeempfänger 4 ein Sendesignal aus. Von der Zeit t₀ bis zur Zeit t₁ registriert der Ultraschall-Sendeempfänger unmittelbar ein Nachhallen des ausgesendeten Sendesignals. Der Bereich des Empfangssignalverlaufs 10 von t₀ bis t₁ kann daher keine Informationen über das seitliche Umfeld 5 des Fahrzeugs 1 enthalten und wird beispielsweise ausgeblendet. Zum Zeitpunkt t₂ nimmt die Amplitude der empfangenen Signalintensität zu, da ein erstes Echosignal aus dem seitlichen Umfeld 5 des Fahrzeugs 1 eintrifft. Der Zeitpunkt t₂ in dem Empfangssignalverlauf 10 kann als Empfangszeitpunkt des ersten Echosignals in dem Empfangssignalverlauf 10 identifiziert werden. Zu einem Zeitpunkt t₄ steigt die Amplitude der empfangenen Signalintensität erneut an, erreicht aber nicht eine Schwellspannung Vₜₕ. Der Bereich von t₄ bis t₅ kann daher nicht als Echosignal identifiziert, sondern als Störsignal betrachtet werden. Vom Zeitpunkt t₆ bis zum Zeitpunkt t₇ wird ein zweites Echosignal aus dem seitlichen Umfeld 5 des Fahrzeugs empfangen, welches die Schwellspannung Vₜₕ überschreitet. Der Zeitpunkt t₆ kann somit als Empfangszeitpunkt eines zweiten Echosignals in dem Empfangssignalverlauf 10 identifiziert werden.

Die Schwellspannung Vₜₕ ist nicht notwendigerweise über die gesamte Messung des Empfangssignalverlaufs 10 konstant. Anders, als in Fig. 5 gezeigt, kann die Schwellspannung auch während der Messung des Empfangssignalverlaufs verändert werden.

Es sei darauf hingewiesen, dass die Schwellspannung Vₜₕ im Wesentlichen empirisch festgelegt wird. Es sind daher Fehler bei der Identifizierung von Echosignalen in dem Empfangssignalverlauf möglich. So würde bei geringfügig anders gewählter Schwellspannung Vₜₕ in Fig. 5. zum Zeitpunkt t₄ ein zweites Echosignal identifiziert, und zum Zeitpunkt t₆ würde bereits ein drittes Echosignal identifiziert. Das vorgeschlagene Verfahren zielt unter anderem auch darauf ab, mit dieser Situation auf verbesserte Weise umzugehen.

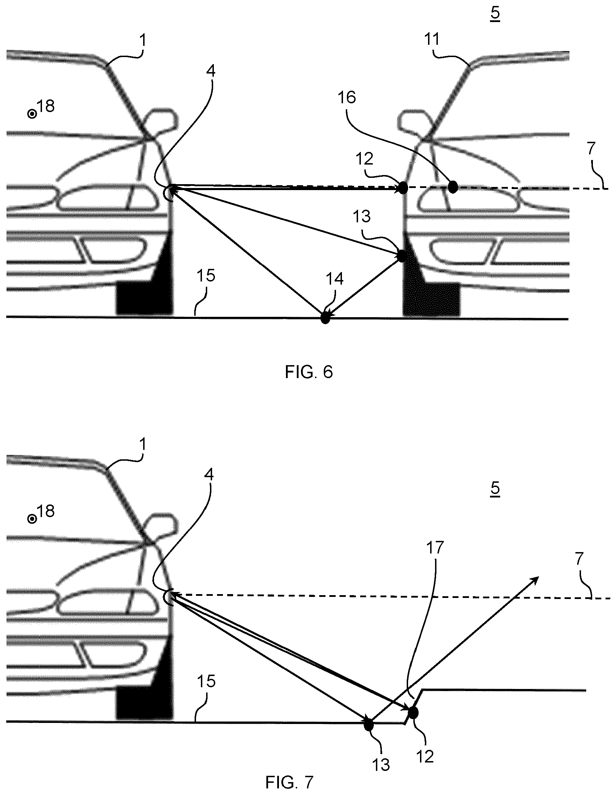

Fig. 6 zeigt eine schematische Darstellung zur Veranschaulichung des Ausbildens eines Doppelechos im Falle eines hohen Hindernisses, und Fig. 7 zeigt eine schematische Darstellung zur Veranschaulichung des Ausbleibens eines Doppelechos im Falle eines niedrigen Hindernisses. Fig. 6 und Fig. 7 werden unter Rückbezug auf die Fig. 5 und 1 beschreiben. Pfeile in Fig. 6, 7 veranschaulichen Ausbreitungswege von Sende- bzw. Echosignalen.

In Fig. 6 ist gezeigt, wie das Fahrzeug 1 an einem geparkten Fahrzeug 11 (Objekt, Hindernis) entlang einer lateralen Fahrtrichtung 18 vorbeifährt. Das von dem Ultraschall-Sendeempfänger 4 zum Zeitpunkt t₀ ausgesendete Sendesignal breitet sich entlang der transversalen Achse 7 des Fahrzeugs 1 zu einem ersten Punkt 12 auf einer Oberfläche des geparkten Fahrzeugs 11 aus, wird von dort reflektiert, und das reflektierte Echosignal breitet sich zurück entlang der transversalen Achse 7 aus und erreicht zum Zeitpunkt t₂ wieder den Ultraschall-Sendeempfänger 4. Die Entfernung zwischen dem Ultraschall-Sendeempfänger 4 und dem ersten Punkt 12 kann durch Multiplizieren der zeitlichen Differenz zwischen t₂ und t₀ mit der Schallgeschwindigkeit von 343 m/s und anschließendes Dividieren durch zwei bestimmt werden. Der erste Punkt 12 ist somit ein erster Reflexionspunkt 12, dessen Entfernung anhand des zur Zeit t₂ auftretenden ersten Echosignals bestimmbar ist.

Eine weitere Komponente der Signalkeule des Sendesignals breitet sich in einer von der transversalen Achse 7 divergierenden Richtung zu einem zweiten Punkt 13 an der Oberfläche des geparkten Fahrzeugs 11 aus, wird von dort als zweites Echosignal zu einem dritten Punkt 14 auf einem Boden 15 und von dort weiter zurück zu dem Sendeempfänger 4 reflektiert, wo es zum Zeitpunkt t₆ eintrifft. Beim Auswerten des Empfangssignalverlaufs 10 liegen jedoch keine Informationen über den tatsächlichen Verlauf der Wegstrecke der eintreffenden Echosignale vor. Daher wird auf die gleiche Weise, wie vorstehend für den ersten Reflexionspunkt 12 beschrieben, eine Entfernung zu einem zweiten, virtuellen Reflexionspunkt 16 bestimmt, dessen Lage, wie in Fig. 6, gezeigt vorläufig auf der transversalen Achse 7 in einer Entfernung angenommen wird, die der halben Signallaufzeit zwischen Aussenden des Sendesignals zur Zeit t₀ und Eintreffen des zweiten Echosignals zur Zeit t₆ entspricht.

Der zweite Reflexionspunkt 16 wird auch als "virtueller" Reflexionspunkt bezeichnet, weil in der für ihn ermittelten Entfernung zu dem Ultraschall-Sendeempfänger 4- oder an seiner für seine trilaterierte Lage, falls, wie später beschrieben eine Trilateration erfolgt - nicht tatsächlich eine Reflexion erfolgte. Vielmehr wird für einen solchen virtuellen Reflexionspunkt eine Entfernung bzw. durch Trilateration eine Lage bestimmt, an welcher eine Reflexion erfolgt wäre, wäre das zugehörige Echosignal nur einmal und nicht mehrfach reflektiert worden.

Es sei angemerkt, dass der erste Reflexionspunkt 12 auf der Oberfläche des geparkten Fahrzeugs 11 und der durch das beschriebene Verfahren nicht bestimmbare Punkt 14 auf der Oberfläche des geparkten Fahrzeugs 14 sich in einem selben Objektabschnitt des Fahrzeugs 14 befinden, der von der Signalkeule des Sendesignals beschallt wird.

In Fig. 7 ist gezeigt, wie das Fahrzeug 1 an einer Bordsteinkante 17 entlang einer lateralen Fahrtrichtung 18 vorbeifährt. Eine Komponente der Signalkeule des zum Zeitpunkt t₀ ausgesendeten Sendesignals breitet sich von dem Ultraschall-Sendeempfänger 4 zu einem ersten Punkt 12 auf der Bordsteinkante 17 aus, wird von dort reflektiert, und das reflektierte Echosignal erreicht den Ultraschall-Sendeempfänger 4 zum Zeitpunkt t₂. Der erste Punkt 12 ist somit ein erster Reflexionspunkt 12, dessen Entfernung anhand des ersten Echosignals bei t₂ auf gleiche Weise wie bei der in Fig. 6 gezeigten Fahrsituation bestimmt wird. Zwar kann es auch hier, ähnlich wie in Fig. 6 gezeigt, zu einer Doppelreflexion an der Bordsteinkante 17 und anschließend an dem Boden 15 kommen, jedoch ist in diesem Fall die Zeitdifferenz zwischen Eintreffen des doppelt reflektierten Echosignals und des einfach reflektierten Echosignals so gering, dass beide Echosignale in dem Empfangssignalverlauf 10 als ein einzelnes, erstes Echosignal identifiziert werden. Eine weitere Komponente der Keule des Sendesignals breitet sich zu einem zweiten Punkt 13 auf dem Boden 15 aus, und wird von dort weiter weg von dem Fahrzeug 1 reflektiert, ohne den Ultraschall-Sendeempfänger 4 zu erreichen.

Somit kann bestimmt werden, dass ein hohes Hindernis 11 in dem seitlichen Umfeld 5 des Fahrzeugs 1 vorliegt, wenn in dem Empfangssignalverlauf 10 zwei Echosignale identifiziert werden können, die bestimmte Kriterien erfüllen, so dass sie ein Doppelecho ausbilden, während ein niedriges Hindernis 17 in dem seitlichen Umfeld 5 vorliegt, wenn in dem Empfangssignalverlauf 10 nur ein Echosignal identifiziert werden kann und/oder zwei Echosignale identifiziert werden können, diese aber die bestimmten Kriterien nicht erfüllen.

Da jedoch, wie vorstehend beschrieben, nicht in jedem Fall alle Echosignale in einem Echosignalverlauf korrekt identifiziert werden können, wird vorgeschlagen, auch in einem weiteren Echosignalverlauf nach einem passenden zweiten Echosignal zu suchen, das zusammen mit dem ersten Echosignal aus dem ersten Echosignalverlauf ein Doppelecho ausbildet. Kriterien für die Zusammengehörigkeit von solchen, aus gleichen oder verschiedenen Echosignalverläufen identifizierten Echosignalen kann insbesondere eine räumliche Lage der aus den jeweiligen Echosignalen trilaterierbaren Reflexionspunkte zueinander sein.

So kann beispielsweise als Kriterium verwendet werden, dass ein räumlicher Abstand zweier Reflexionspunkte, die ein Reflexionspunktpaar aus primärem Reflexionspunkt (12 in Fig. 6) und sekundärem Reflexionspunkt (16 in Fig. 6) ausbilden, dem halben zu erwartenden Längenunterschied zwischen einem direkten Reflexionsweg (4, 12, 4 in Fig. 6) und einem indirekten Reflexionsweg (4, 13, 14, 4 in Fig. 6) entsprechen. Bewährt hat sich als Kriterium ein Maximalabstand von nicht mehr als beispielsweise 25 bis 50 cm und vorzugsweise 35 cm.

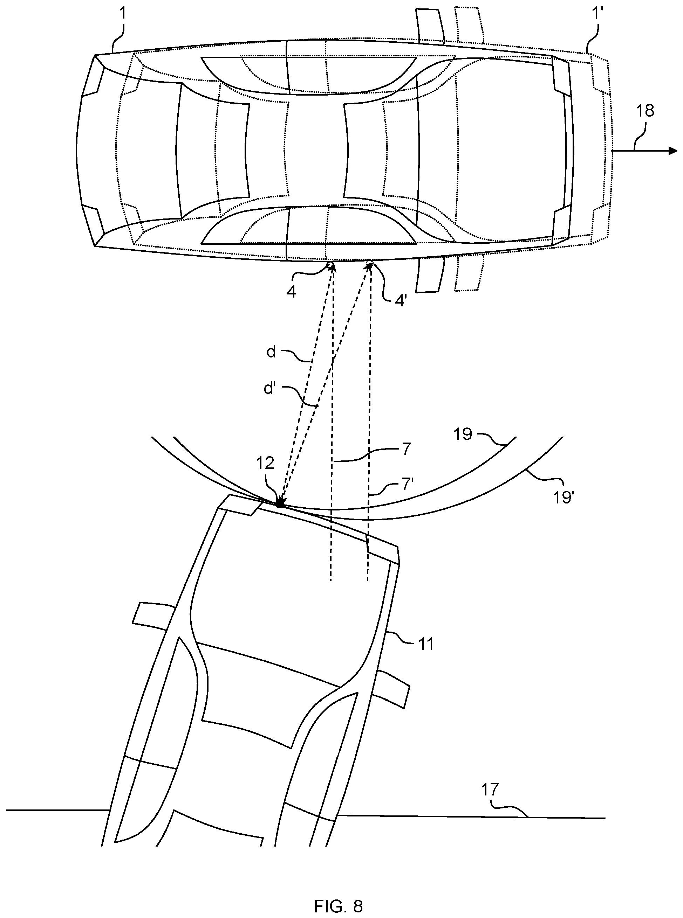

Fig. 8 zeigt eine schematische Darstellung zur Veranschaulichung des Trilaterierens einer Lage eines Reflexionspunkts 12. Fig. 8 zeigt das Fahrzeug 1, 1' beim Vorbeifahren, in einer lateralen Richtung 18, an einer Bordsteinkante 17 (niedriges Hindernis bzw. Objekt), auf der ein geparktes weiteres Fahrzeug 11 (hohes Hindernis bzw. Objekt) diagonal geparkt ist. Das Fahrzeug ist mit Bezugszeichen 1 zu einem ersten Zeitpunkt und mit Bezugszeichen 1' zu einem zweiten Zeitpunkt gezeigt. Entsprechend ist der Ultraschall-Sendeempfänger 4, 4' mit Bezugszeichen 4 an einer ersten Sende- und Empfangsposition zu dem ersten Zeitpunkt und mit Bezugszeichen 4' an einer zweiten Sende-bzw. Empfangsposition zu dem zweiten Zeitpunkt gezeigt.

Zu dem ersten Zeitpunkt an der ersten Sende- und Empfangsposition des Ultraschall-Sendeempfängers 4 wird auf die vorstehend anhand von Fig. 5 bis 7 beschriebene Weise ein Sendesignal ausgesendet und ein Empfangssignalverlauf empfangen und anhand eines Zeitpunkts, zu dem ein Echosignal in dem Empfangssignalverlauf identifiziert wird, eine Entfernung d zu einem ersten Reflexionspunkt 12 bestimmt, an dem das Echosignal reflektiert wurde. Zu dem zweiten Zeitpunkt wird an der zweiten Sende- und Empfangsposition des Ultraschall-Sendeempfängers 4 auf dieselbe Weise eine Entfernung d' zu dem ersten Reflexionspunkt 12 bestimmt. Die Lage des ersten Reflexionspunkts 12 ergibt sich dann als Schnittpunkt eines Kreises 19 mit Radius d um die erste Sende- und Empfangsposition bei 4 als Mittelpunkt mit einem Kreis 19' mit Radius d' um die zweite Sende- und Empfangsposition bei 4' als Mittelpunkt. In der in Fig. 8 gezeigten Fahrsituation ergibt sich somit eine Lage des Reflexionspunkts 12, die lateral gegen die transversalen Achsen 7, 7' des Ultraschall-Sendeempfängers 4, 4' versetzt ist. Durch das Trilaterieren kann somit die tatsächliche Lage des Reflexionspunkts 12 gegenüber einer zunächst angenommen Lage an einem jeweiligen Schnittpunkt der transversalen Achsen 7, 7' mit den Kreisen 19, 19' präzisiert werden.

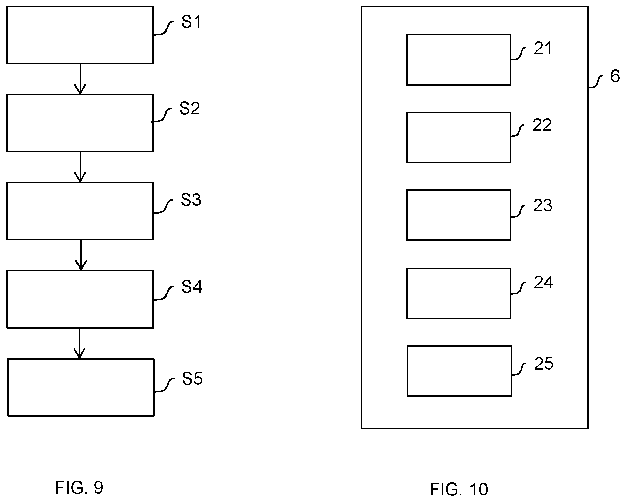

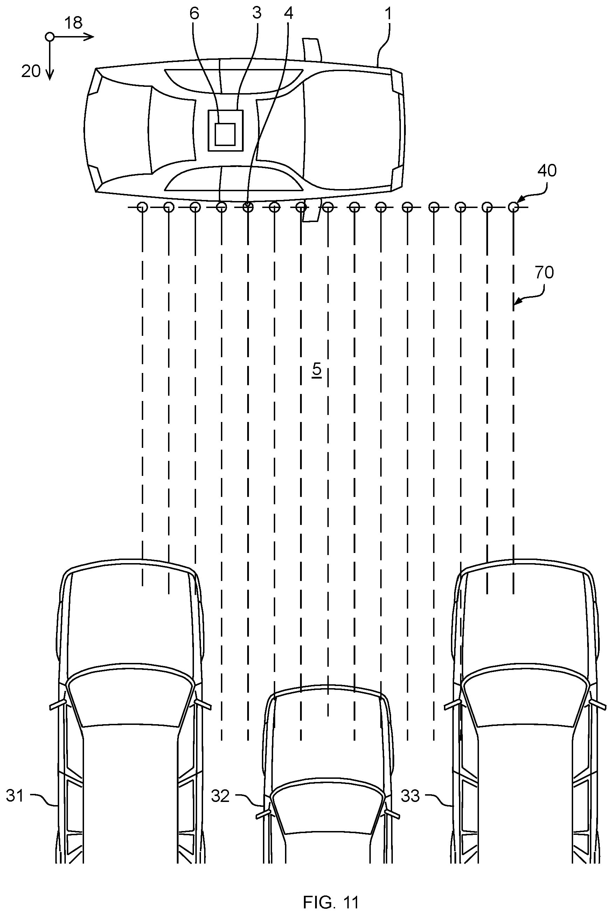

Fig. 9 zeigt ein Flussablaufdiagramm eines Verfahrens gemäß einem Ausführungsbeispiel, Fig. 10 zeigt ein funktionales Blockdiagramm einer Messvorrichtung 6 zum Vermessen des seitlichen Umfelds 5 des Fahrzeugs 1 gemäß dem Ausführungsbeispiel. Fig. 11 zeigt ein Fahrzeug 1, das an einem seitlichen Umfeld 5 vorbeifährt und ein Verfahren gemäß dem Ausführungsbeispiel ausführt.

Das in Fig. 11 gezeigte Fahrzeug 1 ist das in Fig. 1 gezeigte Fahrzeug und weist ein Parkassistenzsystem 3, eine Messvorrichtung 6 und einen Ultraschall-Sendeempfänger 4 auf. Die Messvorrichtung 6 umfasst eine erste bis fünfte Einheit 21-25 (Fig. 10). In einem seitlichen Umfeld 5 des Fahrzeugs sind mehrere Fahrzeuge (hohe Objekte, Hindernisse) 31, 32, 33 geparkt. Hierbei ist die Front des in der Mitte parkenden Fahrzeugs 32 gegenüber den Fronten der zu beiden Seite parkenden Fahrzeuge 31, 33 deutlich in transversaler Richtung zurückgesetzt.

Gemäß einem vorgeschlagenen Einparkverfahren gemäß dem Ausführungsbeispiel veranlasst das Parkassistenzsystem 3, dass das Fahrzeug 1 entlang der lateralen Richtung 18 an einer Vielzahl von Sende- und Empfangspositionen 40 entlang fährt und dabei das in Fig. 9 veranschaulichte Vermessungsverfahren gemäß dem Ausführungsbeispiel durchführt.

Es wird auf Fig. 9 bis Fig. 11 Bezug genommen.

In Schritt S1 eines vorgeschlagenen Vermessungsverfahrens gemäß dem Ausführungsbeispiel steuert die erste Einheit 21 der Messvorrichtung 6, an einer Vielzahl Sende- und Empfangsposition 40 den Ultraschall-Sendeempfänger 4 an und veranlasst diesen dadurch dazu, ein erstes Sendesignal entlang seiner transversalen Achse 70 in einer transversalen Richtung 20 auszusenden und aus dem seitlichen Umfeld 5 einen ersten reflektierten Empfangssignalverlauf (10 in Fig. 5) zu empfangen. Die Ultraschall-Sendeempfänger stellt die empfangenen Empfangssignalverläufe der Messvorrichtung 6 bereit.

Lediglich des einfachen Verständnisses halber kann hierbei angenommen werden, dass das Fahrzeug im Rahmen des vorgeschlagenen Einparkverfahrens zu einer jeweiligen der Sende- und Empfangspositionen 40 fährt, dort anhält, das Sendesignal ausgesendet wird und der Empfangssignalverlauf empfangen wird, und das Fahrzeug 1 sodann zu einer nächsten der Sende- und Empfangspositionen 40 entlang der lateralen Fahrtrichtung 18 weiterfährt. In diesem Fall bezeichnet der Begriff "Sende- und Empfangsposition" genau eine jeweilige Position. Die vorgeschlagenen Verfahren sind jedoch nicht hierauf beschränkt und können auch bei kontinuierlich fahrendem Fahrzeug 1 durchgeführt werden.

In Schritt S2 des vorgeschlagenen Verfahrens identifiziert die zweite Einheit 22 für jede der Sende- und Empfangspositionen 40 eine Anzahl Echosignale in dem jeweiligen Empfangssignalverlauf (10 in Fig. 5). Vorzugsweise identifiziert die zweite Einheit 21 hierbei alle Echosignale in dem jeweiligen Empfangssignalverlauf, deren Signalintensität über einer vorbestimmten oder variablen Schwelle (Vₜₕ in Fig. 5) liegt.

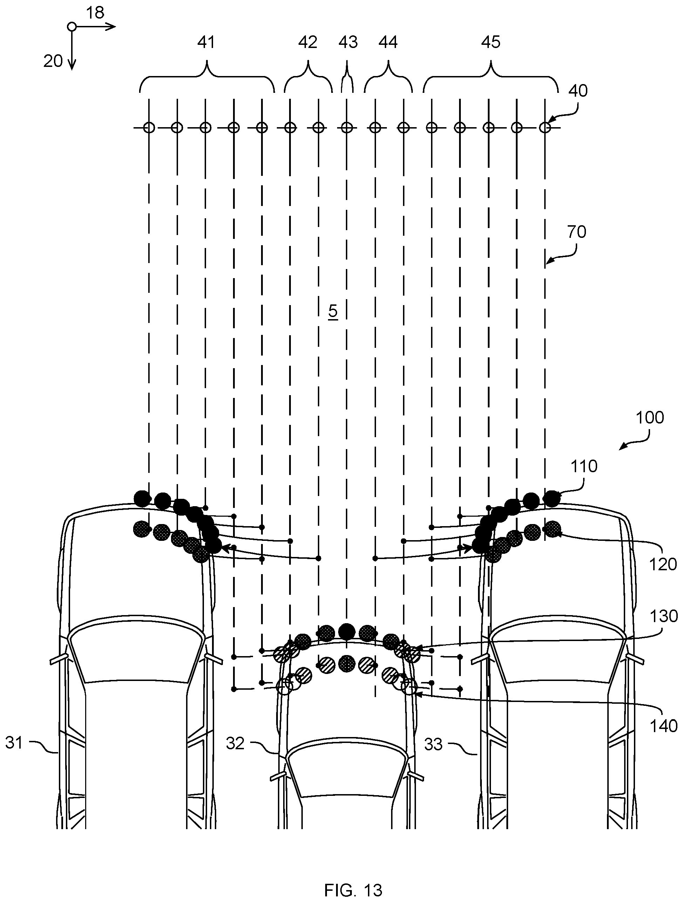

In Schritt S3 bildet die dritte Einheit 23 eine Reflexionspunktmenge (100 in Fig. 13), indem sie mehrfach anhand von jeweils zwei Empfangssignalverläufen (10 in Fig. 5) aus der Vielzahl Empfangssignalverläufe an den jeweiligen Sende- und Empfangspositionen 40 und anhand von jeweils einem Echosignal aus jedem der zwei Empfangssignalverläufe (10 in Fig. 5) einen jeweiligen Reflexionspunkt, d. h. eine Lage eines jeweiligen Reflexionspunkts, in der seitlichen Umgebung trilateriert und in der Reflexionspunktmenge (100 in Fig. 13) speichert.

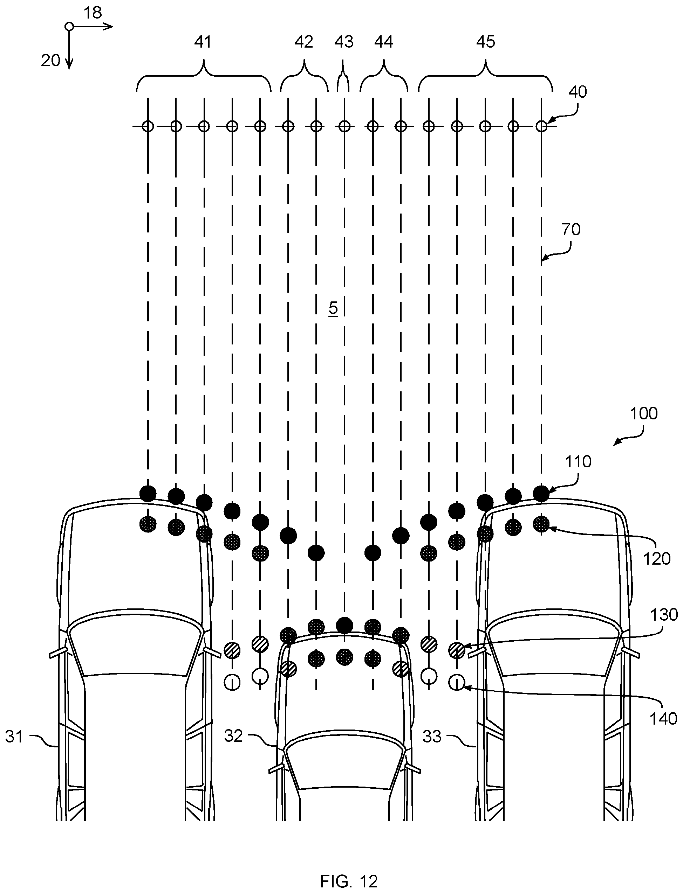

Fig. 12 zeigt eine zweidimensionale Auftragung einer nicht trilaterierten Reflexionspunktmenge 100. In Fig. 12 sind Reflexionspunkte 110, 120, 130, 140 unter der Annahme aufgetragen, dass ein jeweiliges der in Schritt S2 identifizierten Echosignale direkt und entlang der jeweiligen transversalen Achse 70 des Ultraschall-Sendeempfängers 4 an der jeweiligen Sende- und Empfangsposition 40 reflektiert wurde. Das heißt, für ein jeweiliges identifiziertes Echosignal ist ein Reflexionspunkt 110, 120, 130, 140 ist in einer Entfernung zu der Sende- und Empfangsposition 40 des zugehörigen Echosignalverlaufs, die einer halben zeitlichen Differenz zwischen Aussenden des Sendesignals und Empfangen des Empfangssignalverlaufs multipliziert mit der Schallgeschwindigkeit entspricht, entlang der jeweiligen transversalen Achse der transversalen Achsen 70 aufgetragen.

Im Speziellen zeigt Fig. 12: als ausgefüllte Punkte erste Reflexionspunkte 110, deren Entfernungen anhand der zeitlich ersten Echosignale der jeweiligen Empfangssignalverläufe bestimmt wurden; als doppelt schraffierte Punkte zweite Reflexionspunkte 120, deren Entfernungen anhand der zeitlich zweiten Echosignale der jeweiligen Empfangssignalverläufe bestimmt wurden, als einfach schraffierte Punkte dritte Reflexionspunkte 130, deren Entfernungen anhand zeitlich dritter Echosignale einiger der Empfangssignalverläufe bestimmt wurden, und als nicht ausgefüllte Punkte vierte Reflexionspunkte 140, deren Entfernungen anhand zeitlich vierter Echosignale einiger der Empfangssignalverläufe bestimmt wurden.

Das zurückgesetzt geparkte Fahrzeug 32 ist im Wesentlichen verschattet. Das heißt, würden lediglich die ersten Reflexionspunkte 110 als primäre Reflexionspunkte in Betracht gezogen werden und auf das Vorhandensein eines entlang derselben Achse dahinterliegenden sekundären Reflexionspunkts innerhalb eines vorbestimmten Maximalabstands von beispielsweise 25 bis 50 cm und vorzugsweise ca. 35 cm geprüft, um zu bestimmen, ob in Richtung der jeweiligen transversalen Achse 70 eine hohe oder eine niedrige Objekthöhe vorliegt, so würde an den mit 41 und 45 bezeichneten Sende- und Empfangspositionen eine hohe Objekthöhe erkannt, die den parkenden Fahrzeugen 31 und 33 entspricht. An den in Fig. 12 mit 42 und 44 bezeichneten Sende- und Empfangspositionen 40 würde fälschlicherweise eine niedrige, beim Einparken überfahrbare Objekthöhe erkannt, da die zweiten Reflexionspunkte 110 an den in Fig. 12 mit 42 und 44 bezeichneten Sende- und Empfangspositionen um mehr als den vorbestimmten Maximalabstand von den ersten Reflexionspunkten 110 entfernt sind.

Lediglich an der Sende- und Empfangsposition 43 würde korrekte eine hohe Objekthöhe erkannt, die auf das zurückgesetzt geparkte Fahrzeug 32 hinweist. Werden allerdings die gewonnen Objekthöhen in einem statistischen Verfahren bewertet, so könnte diese einzelne (korrekte) Messung als Ausreißer aussortiert werden und inkorrekt eine Parklücke aufgrund der Mehrheit der inkorrekten Messungen im Bereich 42, 43, 44 identifiziert werden. Jedenfalls würden sich bei diesem Vorgehen lediglich sieben korrekte Messpunkte mit korrekten Objekthöhenbestimmungen ergeben (die Lage der Reflexionspunkte entlang der transversalen Achsen 70 an der Sende- und Empfangsposition 43, an den drei am weitesten links angeordneten der in Fig. 12 mit 41 bezeichneten Sende- und Empfangspositionen 40 und an den drei am weitesten rechts angeordneten der in Fig. 12 mit 45 bezeichneten Sende- und Empfangspositionen 40).

Gemäß dem Ausführungsbeispiel werden daher von der dritten Einheit 23 in Schritt S3 die Lagen der Reflexionspunkte 110, 120, 130, 140 anhand von Messungen (Reflexionspunkten 110, 120, 130, 140) aus verschiedenen Empfangssignalverläufen trilateriert.

Gemäß einer bevorzugten Variante des Ausführungsbeispiels werden dabei Reflexionspunkte gleicher Ordnung aus benachbarten Empfangssignalverläufen miteinander trilateriert. Unter "Ordnung" eines Reflexionspunkts ist hierbei die Ordnung, d. h. Position in einer zeitlichen Abfolge, des entsprechenden Echosignals in dem entsprechenden Echosignalverlauf (10 in Fig. 5) zu verstehen. Zum Beispiel wird eine Lage eines der ersten Reflexionspunkte 110, die ursprünglich auf einer der transversalen Achsen 70 an einer der Sende- und Empfangspositionen 40 angenommen wurde, anhand der Lage bzw. Entfernung eines der ersten Reflexionspunkte 110, die ursprünglich auf einer dazu benachbarten transversalen Ache 70 an einer der dazu benachbarten Sende- und Empfangsposition 40 angenommen wurde, nach dem anhand von Fig. 8 beschriebenen Verfahren trilateriert und dadurch präzisiert. Es sind jedoch andere Varianten denkbar, es können auch Reflexionspunkte unterschiedlicher Ordnung aus nicht direkt benachbarten Empfangssignalverläufen miteinander trilateriert werden.

Fig. 13 zeigt eine zweidimensionale Auftragung einer Reflexionspunktmenge 100 aus trilaterierten Reflexionspunkten 110, 120, 130, 140 gemäß dem Ausführungsbeispiel. Es ergibt sich nun ein aufgeräumtes Bild. Die Konturen der geparkten Fahrzeuge 31, 32, 33 sind jeweils mit zwei Reihen aus Reflexionspunkten 110, 120, 130, 140 gesäumt. Allerdings sei darauf hingewiesen, dass das erste und das dritte Fahrzeug 31, 33 jeweils mit einer Reihe aus ersten Reflexionspunkten 110 und dahinterliegenden zweiten Reflexionspunkten 120 gesäumt ist. Dagegen ist eine Kontur des das zurückgesetzt geparkten Fahrzeugs 32, mit Ausnahme einer mittigen Position, mit zwei Reihen aus Reflexionspunkten höherer Ordnung gesäumt.

Es wird auf Fig. 9, Fig. 10, Fig. 11 und 13 Bezug genommen. In Schritt S4 bildet die vierte Einheit 24 mehrerer Paare aus einem jeweiligen primären Reflexionspunkt und einem jeweiligen sekundären Reflexionspunkt der Reflexionspunkte 110-140, die sie anhand eines mindestens lagebasierten Kriteriums als Reflexionspunkt einer direkten bzw. indirekten Reflexion an einem selben Objektabschnitt eines Objekts 31, 32, 33 in dem seitlichen Umfeld 5 identifiziert.

Gemäß dem Ausführungsbeispiel kann die vierte Einheit 24 Paare frei aus der gesamten Reflexionspunktmenge 100 auswählen und ist insbesondere nicht darauf beschränkt, nur Reflexionspunkte aus ein und demselben Echosignalverlauf (Reflexionspunkte, die in Fig. 12 auf ein und derselben Achse 70 aufgetragen sind) auszuwählen.

Bei der Paarbildung kann insbesondere jeder als primärer Reflexionspunkt identifizierte Reflexionspunkt 110-140 nur einmal für eine erfolgreiche Paarbildung verwendet werden; als sekundärer Reflexionspunkt in Betracht gezogene Reflexionspunkte 110-140 können jedoch mehrfach als sekundäre Reflexionspunkte benutzt werden.

Auf diese Weise lassen sich entlang der Kontur des Fahrzeugs 31 (der rechten Hälfte davon) insgesamt mindestens sieben Paare aus einem jeweiligen primärem Reflexionspunkt 110 und einem jeweils nächstliegenden sekundärem Reflexionspunkt 120 bilden, obwohl nur fünf zweite Reflexionspunkte 120 im Bereich der Kontur des Fahrzeugs 31 identifiziert wurden.

Im Bereich des zurückgesetzt geparkten Fahrzeugs 32 lassen sich mindestens neun Paare aus einem primären Reflexionspunkt erster, zweiter oder dritter Ordnung 110, 120, 130 und einem aufgrund des lagebasierten Kriteriums als zugehörig erkannten sekundären Reflexionspunkt zweiter, dritter bzw. vierter Ordnung 120, 230, 140 bilden.

Es sei auch darauf hingewiesen, dass die vierte Einheit 42 nicht notwendigerweise über Kenntnis der Ordnung der Reflexionspunkte zu verfügen braucht. Ausreichend ist, dass die als primärer bzw. sekundärer Reflexionspunkt identifizierte Reflexionspunkt der Reflexionspunktmenge 100 dem lagebasierten Kriterium genügen.

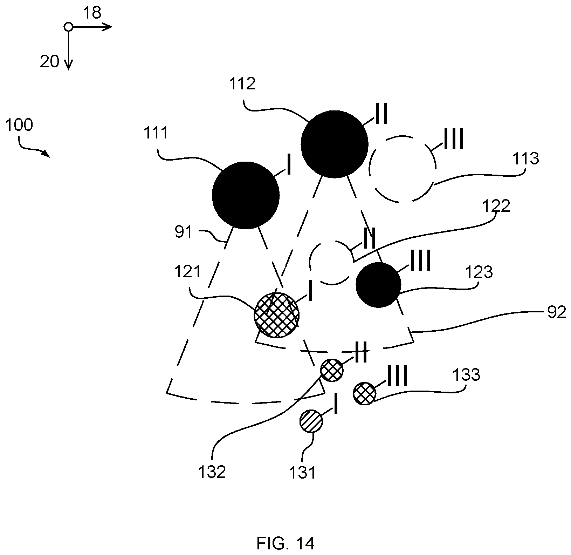

Für Details zu dem lagebasierten Kriterium und den Grundsätzen des Identifizierens von Reflexionspunktpaaren sei auf die vorstehend anhand von Fig. 6 und die nachstehend anhand von Fig. 14 gegebene Beschreibung verwiesen.

In Schritt S5 bestimmt die fünfte Einheit 25 der Messvorrichtung 6 eine Objekthöhe an einem jeweiligen der Reflexionspunkte der Reflexionspunktmenge 100 in dem seitlichen Umfeld 5 als hoch, wenn der betreffende Reflexionspunkt 110-140 ein primärer Reflexionspunkt eines der gebildeten Paare ist, und als niedrig, wenn in Schritt d) kein Paar mit dem betreffenden Reflexionspunkt 110-140 als primärem oder sekundärem Reflexionspunkt gebildet wurde.

Bei der in Fig. 13 gezeigten Situation würden somit insgesamt 23 Messpunkte mit Lagen von Reflexionspunkten der Reflexionspunktmenge 100 erzeugt werden, an denen korrekt eine hohe Objekthöhe bestimmt wird. Somit konnte eine deutlich höhere Anzahl an korrekten Messpunkten erzeugt werden als in dem Fall, dass nicht trilateriert wird und nur innerhalb eines selben Empfangssignalverlaufs nach Doppelechos gesucht wird.

Nachdem solchermaßen Objekthöhen an einer Vielzahl von Reflexionspunkten der trilaterierten Reflexionspunktmenge 100 (Fig. 13) in dem seitlichen Umfeld 5 des Fahrzeugs 1 bestimmt wurden, kann bei dem Einparkverfahren das Ausführungsbeispiel sodann in dem seitlichen Umfeld 5 eine Parklücke bestimmt werden, die frei von Reflexionspunkten mit einer als "hoch" bestimmten Objekthöhe ist; und das Fahrzeug, und das Parkassistenzsystem kann das Fahrzeug 1 in die Parklücke einparken. Bei der in den Fig. 11 bis Fig. 13 illustrierten Situation würde allerdings korrekt keine Parklücke bestimmt, und demgemäß kann das Fahrzeug 1 hier nicht eingeparkt werden.

Fig. 14 zeigt einen Ausschnitt aus einer Reflexionspunktmenge mit mehreren Reflexionspunkten 111-133 zur Erläuterung von Kriterien für die Reflexionspunktpaarbildung gemäß weiteren Ausführungsbeispielen.

Bei den weiteren Ausführungsbeispielen werden in Schritt S3 beim Bilden der Reflexionspunktmenge in der Reflexionspunktmenge 100 neben den Lagen der trilaterierten Reflexionspunkte ein oder mehrere Attribute gespeichert. Die Attribute sind in Fig. 14 wie folgt visualisiert:
Ein erstes Attribut ist die Ordnung der beiden Echosignale, d. h. ihre Position in einer zeitlichen Abfolge von Echosignalen in einem jeweiligen Empfangssignalverlauf (10 in Fig. 5), anhand derer der Reflexionspunkt trilateriert wurde. Es wird für die vorliegende Beschreibung zum einfacheren Verständnis davon ausgegangen, dass jeder der Reflexionspunkte 111-133 anhand zweier Echosignale von jeweils gleicher Ordnung trilateriert wurde. Reflexionspunkte 111, 112 erster Ordnung sind als ausgefüllte Punkte dargestellt. Reflexionspunkte 121, 123 zweiter Ordnung sind als doppelt schraffierte Punkte dargestellt. Reflexionspunkte 131, 132, 133 dritter Ordnung sind als einfach schraffierte Punkte dargestellt.

Ein weiteres Attribut ist eine Signalstärke, beispielsweise der Mittelwert der maximalen Amplituden der beiden Echosignale, anhand derer der jeweilige Reflexionspunkt 111-133 trilateriert wurde. Die Signalstärke ist in Fig. 14 durch den Durchmesser eines jeweiligen der Reflexionspunkte 111-133 dargestellt, wobei ein großer Durchmesser für eine hohe Signalstärke und ein kleiner Durchmesser für eine niedrige Signalstärke steht.

Noch ein weiteres Attribut betrifft Informationen über die beiden Empfangssignalverläufe, anhand derer der jeweilige Reflexionspunkt 111-133 trilateriert wurde, insbesondere die Sende- und Empfangsposition des jeweiligen Empfangssignalverlaufs (10 in Fig. 5). Ein Attribut betreffend die Identität der zu trilaterieren Empfangssignalverläufe ist in Fig. 14 mit römischen Ziffern dargestellt. Hierbei steht römisch "I" für ein erstes Paar an Empfangssignalverläufen, römisch "II" für ein zweites Paar an Empfangssignalverläufen und römisch "III" für ein drittes Paar an Empfangssignalverläufen. Anhand der Identität eines Empfangssignalverlaufs können die zugehörigen Sende- und Empfangspositionen ermittelt, zum Beispiel in einer von der ersten Einheit erstellten Tabelle nachgeschlagen werden, oder dergleichen.

Fig. 14 zeigt weiterhin theoretisch zu erwartende Lagen weiterer Reflexionspunkte bei 122 und 113. So wäre in dem zweiten Paar II aus Empfangssignalverläufen eigentlich bei 122 ein Reflexionspunkt zweiter Ordnung mittlerer Signalstärke zu erwarten. Die zugehörigen Echosignale wurden jedoch im vorliegenden Beispiel wegen Rauschens, nicht optimal gewählter Schwellwerte oder dergleichen nicht identifiziert. Infolgedessen wird der Reflexionspunkt 132, der seiner Signalstärke nach ein Reflexionspunkt dritter Ordnung sein sollte, als Reflexionspunkt zweiter Ordnung identifiziert. Desgleichen wäre in dem dritten Paar III aus Empfangssignalverläufen eigentlich ein Reflexionspunkt erster Ordnung hoher Signalstärke bei 113 zu erwarten. Die zugehörigen Echosignale wurden jedoch nicht identifiziert. Deswegen wird der Reflexionspunkt 123, der seiner Signalstärke nach ein Reflexionspunkt zweiter Ordnung sein sollte, ggf. fälschlicherweise als Reflexionspunkt erster Ordnung identifiziert, und der Reflexionspunkt 133, der seiner Signalstärke nach eigentlich ein Reflexionspunkt dritter Ordnung sein sollte, wird ggf. fälschlicherweise als Reflexionspunkt zweiter Ordnung identifiziert.

Im Folgenden werden mögliche lagebasierte sowie weitere Kriterien besprochen, wie unter der Annahme, dass es sich bei den Reflexionspunkten erster Ordnung 111 und 112 um primäre Reflexionspunkte handelt, zugehörige sekundäre Reflexionspunkte ermittelt und aussagekräftige Messpunkte (Bestimmungen von Objekthöhe und zugehöriger Lage) erzeugt werden können. Die nachstehend besprochenen Kriterien sind Beispiele für das "mindestens lagebasierte Kriterium" in Schritt S4 (Fig. 9).

Insbesondere zeigt Fig. 14, dass für jeden der primären Reflexionspunkte 111, 112 ein geometrisches Suchfenster 91, 92 definiert ist, das an der transversalen Richtung 20 ausgerichtet ist, spiegelbildlich zu dieser ist, und sich ausgehend von dem primären Reflexionspunkt 111, 112 in der transversalen Richtung (d. h. weg von den Sende- und Empfangspositionen 40 in Fig. 11 bis 13) lateral, d.h.,d. h. in der lateralen Richtung 18, aufweitet.

Gemäß einem Ausführungsbeispiel lautet eines der Kriterien, dass der sekundäre Reflexionspunkt 121, 123 sich in dem geometrischen Suchfenster 91, 92 befinden muss. Dadurch, dass das geometrische Suchfenster kreissegmentförmig mit dem primären Reflexionspunkt 111, 112 als Spitze ist, kann verhindert werden, dass bei einer rein lagebasierten Bestimmung von Reflexionspunktpaaren fälschlich zwei primäre Reflexionspunkte 111, 112 als Reflexionspunktpaar aus direkter und indirekter Reflexion erkannt werden.

Durch Wahl eines Radius des kreissegmentförmigen geometrischen Suchfensters 91, 92 gemäß einem vorbestimmten Maximalabstand kann ferner sichergestellt werden, dass ein Abstand zwischen dem primären Reflexionspunkt und 112, 112 und dem sekundären Reflexionspunkt 121, 123 kleiner als ein vorbestimmter Maximalabstand ist.

Es sei darauf hingewiesen, dass das zweite geometrische Suchfenster 92, das für den primären Reflexionspunkt 112 definiert ist, bei dem es sich um einen Reflexionspunkt erster Ordnung aus dem zweiten Paar II Empfangssignalverläufe handelt, zwar keinen Reflexionspunkt zweiter Ordnung aus dem zweiten Paar II Empfangssignalverläufe aufweist, jedoch zwei Reflexionspunkte zweiter Ordnung aus anderen Empfangssignalverläufen, nämlich Reflexionspunkt 121 aus dem ersten Paar I Empfangssignalverläufe und Reflexionspunkt 123 aus dem dritten Paar III Empfangssignalverläufe.

Gemäß einem Ausführungsbeispiel wird in einem Fall, dass sich mehr als ein Reflexionspunkt 121, 123 in einem geometrischen Suchfenster 92 befindet, der zu dem primären Reflexionspunkt 112 nächstliegende Reflexionspunkt 123 als der sekundäre Reflexionspunkt des zu bildenden Paars gewählt.

Gemäß einem Ausführungsbeispiel lautet eines der Kriterien, dass nur Reflexionspunktpaare unterschiedlicher Ordnung, und im Speziellen nur mit einem Unterschied von eins in der Ordnung miteinander kombiniert werden. Somit kann mit einem Unterschied von eins die Ordnung der Echosignale, zu Paaren kombiniert werden. Demgemäß kann der Reflexionspunkt 112 mit dem Reflexionspunkt 121 kombiniert werden, nicht aber mit dem Reflexionspunkt 123. In einer Variante, in der keine geometrischen Suchfenster 91, 92 benutzt werden, kann gemäß dem Ausführungsbeispiel auch verhindert werden, dass ein Paar aus dem ersten, primären Reflexionspunkt 112 mit dem dritten Reflexionspunkt 133 gebildet, und dadurch ggf. ein Paar aus dem dritten Reflexionspunkt 133 und einem weiteren, dahinter liegenden (nicht gezeigten) vierten Reflexionspunkt desselben Empfangssignalverlaufs verschattet wird.

Gemäß einem Ausführungsbeispiel lautet eines der Kriterien, dass der auszuwählende sekundäre Reflexionspunkt weiter von dem Sende- und Empfangspunkt (40 in Fig. 11 bis 13) des zu dem primären Reflexionspunkt 111, 112 zugehörigen Echosignals entfernt ist, als der erste Reflexionspunkt. In Fig. 14 ist dieses Kriterium für die primären Reflexionspunkte 111, 112 stets erfüllt.

Gemäß einem Ausführungsbeispiel lautet eines der Kriterien, dass eine für den potentiellen sekundären Reflexionspunkt als Attribut gespeicherte Signalstärke um nicht mehr als einen vorbestimmten Faktor gegenüber einer für den potentiellen primären Reflexionspunkt als Attribut gespeicherten Signalstärke reduziert ist. Das heißt, die Signalstärke des sekundären Reflexionspunkts darf nicht größer als die Signalstärke des primären Reflexionspunkts sein und darf nicht um mehr als einen vorbestimmten Faktor kleiner als die Signalstärke des primären Reflexionspunkts sein. Der vorbestimmte Faktor kann empirisch anhand typischer Signalstärkenverhältnisse gewählt werden. Mit dem vorliegenden Kriterium könnte beispielsweise in Fig. 14 verhindert werden, dass der primäre Reflexionspunkt 112 erster Ordnung fälschlich mit dem Reflexionspunkt 132 dritter Ordnung kombiniert wird, selbst wenn beispielsweise Informationen über die Ordnung der Reflexionspunkte 111-133 nicht verfügbar sind und die geometrischen Suchfenster 91, 92 nicht benutzt werden.

Anhand der vorstehend beispielhaft beschriebenen lagebasierten und weiteren Kriterien wurde deutlich, dass trotz des nicht erkannten Reflexionspunkts bei 122 für den Reflexionspunkt 112 ein Reflexionspunktpaar entweder mit dem Reflexionspunkt 121 oder mit dem Reflexionspunkt 123 gebildet werden und so ein zusätzlicher aussagekräftiger Messpunkt gewonnen werden kann.

Insbesondere sei noch darauf hingewiesen, dass vorzugsweise ein Reflexionspunkt, der als sekundärer Reflexionspunkt ausgewählt wurde, auch als sekundärer Reflexionspunkt weiterer Reflexionspunktpaare benutzt werden kann, jedoch vorzugsweise nicht als primärer Reflexionspunkt weiterer Reflexionspunktpaare benutzt werden kann. So kann in dem Beispiel in Fig. 14 ein erstes Reflexionspunktpaar in einem Ausführungsbeispiel aus den Reflexionspunkten 111, 121 und ein zweites Reflexionspunktpaar aus den Reflexionspunkten 112, 121 gebildet werden. Somit kann vorteilhaft sowohl an der Lage des primären Reflexionspunkts 111 als auch an der Lage des primären Reflexionspunkts 112 ein aussagekräftiger Messpunkt gewonnen werden.

Dagegen kann, falls in einem Ausführungsbeispiel ein Reflexionspunktpaar aus den Reflexionspunkten 112 und 123 gebildet wird, in einem Ausführungsbeispiel in der Folge kein Reflexionspunktpaar mehr aus den Reflexionspunkten 123 und 133 gebildet werden.

Auf diese Weise kann vorteilhafterweise verhindert werden, dass an der Position des Reflexionspunkts 123, der als Reflexionspunkt erster Ordnung erkannt wurde, der aber eigentlich eine indirekte Reflexion zu dem aufgrund Rauschens oder dergleichen nicht identifizierten Reflexionspunkt bei 113 darstellt, fälschlicherweise ein nicht aussagekräftiger Messpunkt gewonnen wird.

Die vorstehend beschriebenen Kriterien können auf geeignete Weise, beispielsweise logisch und/oder probabilistisch, miteinander kombiniert werden.

Obwohl die vorliegende Erfindung anhand von Ausführungsbeispielen beschrieben wurde, ist sie vielfältig modifizierbar.

Fig. 1 und 11 zeigen die Messvorrichtung 6 als Teil des Parkassistenzsystems 3. Die Messvorrichtung 6 kann jedoch alternativ hierzu auch separat in dem Fahrzeug 1 angeordnet sein. Die Messvorrichtung 6 kann auch mit dem Ultraschall-Sendeempfänger 4 zu einer Einheit integriert sein.

Die vorgeschlagene Lehre wurde anhand der vereinfachenden Annahme beschrieben, dass das Fahrzeug 1 und der Ultraschall-Sendeempfänger 4 sich beim Aussenden eines Sendesignals und während des gesamten Empfangens des Empfangssignalverlaufs an ein und derselben Sende- und Empfangsposition befindet, anschließend zu einer nächsten Sende- und Empfangsposition weiterfährt, und dort erneut ein stationäres Senden und Empfangen durchführt. Es versteht sich jedoch, dass das Fahrzeug 1 bevorzugt mit gleichmäßiger Fahrgeschwindigkeit entlang der lateralen Richtung 18 fahren kann. In diesem Falle unterscheiden sich die Sendeposition des Sendesignals von den jeweiligen Empfangspositionen jeweilige Echosignale in dem empfangenen Echosignalverlauf. Eine entsprechende Anpassung der vorliegend offenbarten geometrischen, trigonometrischen bzw. mathematischen Überlegungen bereitet dem Fachmann keine Schwierigkeiten.

In Fig. 14 ist gezeigt, dass die für einen jeweiligen der primären Reflexionspunkte 111, 112 definierten geometrischen Suchfenster 91, 92 an der transversalen Richtung 20 ausgerichtet und spiegelbildlich dazu sind und sich in der lateralen Richtung 18 lateral aufweiten. Diese Form des geometrischen Suchfensters ist jedoch lediglich eines von vielen möglichen Beispielen. Sofern als Attribut die Identität des bzw. der jeweiligen Empfangssignalverläufe in der Reflexionsmenge 100 gespeichert ist, kann ein jeweiliges geometrisches Suchfenster 91, 92 auch an einer Geraden ausgerichtet und spiegelbildlich dazu sein, die die Sende- und Empfangsposition (40 in Fig. 11-13) eines der Empfangssignalverläufe sowie den primären Reflexionspunkt 111, 112 schneidet. Das geometrische Suchfenster 91, 92 kann auch andere, nicht kreissegmentförmige Formen aufweisen, beispielsweise ein Quadrat oder ein Rechteck. Das für einen jeweiligen primären Reflexionspunkt 111, 112 definierte geometrische Suchfenster 91, 92 braucht den primären Reflexionspunkt 111, 112 nicht zu umfassen, und kann insbesondere einen gewissen transversalen Abstand zu dem primären Reflexionspunkt 111 112 einhalten, um zu vermeiden, dass zwei zu dicht beieinander liegende Reflexionspunkte aus zwei verschiedenen Empfangssignalverläufen fälschlich als ein Reflexionspunktpaar bzw. Doppelecho identifiziert werden.

### BEZUGSZEICHENLISTE

- 1, 1': Fahrzeug
- 2: Umfeld
- 3: Parkassistenzsystem
- 4, 4': Ultraschall-Sendeempfänger
- 5: seitliches Umfeld
- 6: Messvorrichtung
- 7: transversale Achse
- 8: horizontaler Verlauf der Sendesignalintensität
- 9: vertikaler Verlauf der Sendesignalintensität
- 10: Empfangssignalverlauf
- 11: geparktes weiteres Fahrzeug
- 12: erster Punkt, erster Reflexionspunkt
- 13: zweiter Punkt
- 14: dritter Punkt
- 15: Boden
- 16: virtueller Reflexionspunkt, zweiter Reflexionspunkt
- 17: Bordsteinkante
- 18: laterale Richtung
- 19, 19': Kreis
- 20: transversale Richtung
- 21-26: erste bis sechste Einheit
- 31-33: Hindernis, Objekt, geparktes Fahrzeug
- 40: Sende- und Empfangspositionen
- 41-45: Sende- bzw. Empfangspositionen
- 70: transversale Achsen
- 91, 92: geometrische Suchfenster
- 100: Reflexionspunktmenge
- 110: Reflexionspunkte erster Ordnung
- 111: Reflexionspunkt erster Ordnung
- 112: Reflexionspunkt erster Ordnung
- 113: nicht identifizierter Reflexionspunkt erster Ordnung
- 120: Reflexionspunkte zweiter Ordnung
- 121: Reflexionspunkt zweiter Ordnung
- 122: nicht identifizierter Reflexionspunkt zweiter Ordnung
- 123: als Reflexionspunkt erster Ordnung identifizierter Reflexionspunkt zweiter Ordnung
- 130: Reflexionspunkte dritter Ordnung
- 131: Reflexionspunkt dritter Ordnung
- 132: als Reflexionspunkt zweiter Ordnung identifizierter Reflexionspunkt dritter Ordnung
- 140: Reflexionspunkte vierter Ordnung
- t0-t6: Zeitpunkte
- d, d': Entfernungen
- Vth: Schwellwert
- S1-S6: Verfahrensschritte

## Patentansprüche

1. Verfahren zum Vermessen eines seitlichen Umfelds (5) eines mit mindestens einem seitlichen Ultraschall-Sendeempfänger (4) versehenen Fahrzeugs (1) mit den Schritten:
a) Ansteuern (S1) des mindestens einen Ultraschall-Sendeempfängers (4) an einer Vielzahl Sende- und Empfangspositionen (40) entlang einer lateralen Fahrtrichtung (18) des Fahrzeugs (1) zum Aussenden eines jeweiligen Sendesignals in einer transversalen Richtung (20) quer zu der Fahrtrichtung (18) des Fahrzeugs (1) und Empfangen eines jeweiligen aus dem seitlichen Umfeld reflektierten Empfangssignalverlaufs (10);
b) Identifizieren (S2) einer Anzahl Echosignale in dem jeweiligen Empfangssignalverlauf (10);
c) Bilden einer Reflexionspunktmenge (100), indem mehrfach anhand von jeweils zwei Empfangssignalverläufen aus der Vielzahl Empfangssignalverläufe (10) und anhand von jeweils einem Echosignal aus jedem der zwei Empfangssignalverläufe (10) ein jeweiliger Reflexionspunkt (110, 120, 130, 140) in der seitlichen Umgebung (5) trilateriert und in der Reflexionspunktmenge (100) gespeichert wird;
d) Bilden mehrerer Paare aus einem jeweiligen primären Reflexionspunkt (111, 112) und einem jeweiligen sekundären Reflexionspunkt (121, 123) der Reflexionspunktmenge (100), die anhand eines mindestens lagebasierten Kriteriums als Reflexionspunkte einer direkten und/oder indirekten Reflexion an einem selben Objektabschnitt (31, 32, 33) in dem seitlichen Umfeld (5) identifiziert werden; und
e) Bestimmen einer Objekthöhe an einem jeweiligen der Reflexionspunkte (110, 120, 130, 140) in dem seitlichen Umfeld als hoch, wenn der betreffende Reflexionspunkt ein primärer Reflexionspunkt (111, 112) eines der gebildeten Paare ist, und als niedrig, wenn in Schritt d) kein Paar mit dem betreffenden Reflexionspunkt als primärem oder sekundärem Reflexionspunkt gebildet wurde.

2. Verfahren nach Anspruch 1, **dadurch gekennzeichnet, dass** das Kriterium in Schritt e) umfasst, dass ein jeweiliger sekundärer Reflexionspunkt (121, 123) innerhalb eines relativ zu dem jeweiligen primären Reflexionspunkt (111, 112) definierten geometrischen Suchfensters (91, 92) angeordnet ist.

3. Verfahren nach Anspruch 2, **dadurch gekennzeichnet, dass** das geometrische Suchfenster (92) mindestens einen Reflexionspunkt (121, 123) umfasst, der anhand von jeweiligen zwei Echosignalen trilateriert wurde, die in anderen Empfangssignalverläufen identifiziert wurden als die zwei Echosignale, anhand derer der primäre Reflexionspunkt (112) trilateriert wurde.

4. Verfahren nach Anspruch 2, **dadurch gekennzeichnet, dass** sich das geometrische (91, 92) Suchfenster in der transversalen Richtung mit zunehmendem Abstand zu dem primären Reflexionspunkt (111, 112) lateral aufweitet.

5. Verfahren nach einem der vorhergehenden Ansprüche, **dadurch gekennzeichnet, dass** unter mehreren Reflexionspunkten (121, 123), die das Kriterium in Bezug auf einen jeweiligen primären Reflexionspunkt (112) erfüllen, der zu dem primären Reflexionspunkt (112) nächstliegende Reflexionspunkt (123) als der sekundäre Reflexionspunkt des zu bildenden Paars gewählt wird.

6. Verfahren nach einem der vorhergehenden Ansprüche, **dadurch gekennzeichnet, dass** die in dem jeweiligen Empfangssignalverlauf (10) identifizierten Echosignale gemäß ihrer zeitlichen Abfolge geordnet werden und in Schritt c) Echosignale gleicher Ordnung aus an benachbarten Empfangspositionen empfangenen Echosignalverläufen (10) zum Trilaterieren eines jeweiligen Reflexionspunkts (110, 120, 130, 140) benutzt werden.

7. Verfahren nach Anspruch 6, **dadurch gekennzeichnet, dass** das Kriterium in Schritt e) umfasst, dass die Ordnung der Echosignale, anhand derer der sekundäre Reflexionspunkt (121) trilateriert wurde, um eins höher ist als die Ordnung der Echosignale, anhand derer der primäre Reflexionspunkt (111, 112) trilateriert wurde.

8. Verfahren nach einem der vorhergehenden Ansprüche, **dadurch gekennzeichnet, dass** das Kriterium in Schritt e) umfasst, dass der sekundäre Reflexionspunkt (121, 123, 132, 131, 133) weiter von dem Sende- und Empfangspunkt des zu dem primären Reflexionspunkt (111, 112) zugehörigen Echosignals entfernt ist als der primäre Reflexionspunkt (111, 112).

9. Verfahren nach einem der vorhergehenden Ansprüche, **dadurch gekennzeichnet, dass** das Kriterium in Schritt e) umfasst, dass ein Abstand zwischen dem primären Reflexionspunkt (111, 112) und dem sekundären Reflexionspunkt (121, 123) kleiner als ein vorbestimmter Maximalabstand ist.

10. Verfahren nach einem der vorhergehenden Ansprüche, **dadurch gekennzeichnet, dass** das Kriterium in Schritt e) umfasst, dass eine Signalstärke mindestens eines Echosignals, anhand dessen der sekundäre Reflexionspunkt (121, 123) trilateriert wurde, um nicht mehr als einen vorbestimmten Faktor gegenüber einer Signalstärke mindestens eines Echosignals, anhand dessen der primäre Reflexionspunkt (111, 112) trilateriert wurde, reduziert ist.

11. Verfahren nach einem der vorhergehenden Ansprüche, **dadurch gekennzeichnet, dass** in der Reflexionspunktmenge (100) für einen jeweiligen Reflexionspunkt (111-133) die trilaterierte Lage des Reflexionspunkts (111-133) sowie optional ein oder mehrere Attribute gespeichert werden und der Schritte e) nach Abschluss der Schritte a), b) und c) anhand der in der gespeicherten Reflexionspunktmenge (100) gespeicherten Lagen und ggf. der gespeicherten Attribute der Reflexionspunkte (111-133) durchgeführt wird.

12. Verfahren zum Einparken eines Fahrzeugs (1), das mit mindestens einem seitlichen Ultraschall-Sendeempfänger (4) und einem Parkassistenzsystem (3) versehen ist, umfassend:
Durchführen des Verfahrens nach einem der Ansprüche 1 bis 11, um die Lagen und die Objekthöhen an einer Vielzahl von primären Reflexionspunkten (110, 120, 130) in dem seitlichen Umfeld (5) des Fahrzeugs (1) zu bestimmen;
Bestimmen einer Parklücke in dem seitlichen Umfeld (5), die frei von Reflexionspunkten mit einer als "hoch" bestimmten Objekthöhe ist; und
Einparken des Fahrzeugs (1) in die Parklücke mit Hilfe des Parkassistenzsystems (3).

13. Computerprogrammprodukt, umfassend Befehle, die bei der Ausführung durch eine Computervorrichtung diese dazu veranlassen, das Verfahren nach einem der Ansprüche 1 bis 11 auszuführen.

14. Messvorrichtung (6) für ein Parkassistenzsystem (3) eines mit mindestens einem seitlichen Ultraschall-Sendeempfänger (4) versehenen Fahrzeugs (1), wobei die Messvorrichtung (6) zum Vermessen eines seitlichen Umfelds (5) des Fahrzeugs (6) eingerichtet ist und umfasst:
a) eine erste Einheit (21), die dazu eingerichtet ist, den mindestens einen Ultraschall-Sendeempfänger (4) an einer Vielzahl Sende- und Empfangspositionen (40) entlang einer lateralen Fahrtrichtung (18) des Fahrzeugs (1) zum Aussenden eines jeweiligen Sendesignals in einer transversalen Richtung (20) quer zu der Fahrtrichtung (18) des Fahrzeugs (1) und Empfangen eines jeweiligen aus dem seitlichen Umfeld (5) reflektierten Empfangssignalverlaufs (10) anzusteuern;
b) eine zweite Einheit (22), die dazu eingerichtet ist, eine Anzahl Echosignale in dem jeweiligen Empfangssignalverlauf (10) zu identifizieren;
c) eine dritte Einheit (23), die dazu eingerichtet ist, eine Reflexionspunktmenge (100) zu bilden, indem sie mehrfach anhand von jeweils zwei Empfangssignalverläufen (10) aus der Vielzahl Empfangssignalverläufe (10) und anhand von jeweils einem Echosignal aus jedem der zwei Empfangssignalverläufe (10) einen jeweiligen Reflexionspunkt (110, 120, 130, 140) in der seitlichen Umgebung (5) trilateriert und in der Reflexionspunktmenge (100) speichert;
d) eine vierte Einheit (24), die dazu eingerichtet ist, mehrerer Paare aus einem jeweiligen primären Reflexionspunkt (111, 112) und einem jeweiligen sekundären Reflexionspunkt (121, 123) der Reflexionspunktmenge (100) zu bilden, die sie anhand eines mindestens lagebasierten Kriteriums als Reflexionspunkte einer direkten und/oder indirekten Reflexion an einem selben Objektabschnitt (31, 32, 33) in dem seitlichen Umfeld (5) identifiziert; und
e) eine fünfte Einheit (25), die dazu eingerichtet ist, eine Objekthöhe an einem jeweiligen der Reflexionspunkte (110, 120, 130) in dem seitlichen Umfeld als hoch zu bestimmen, wenn der betreffende Reflexionspunkt ein primärer Reflexionspunkt (111, 112) eines der gebildeten Paare ist, und als niedrig zu bestimmen, wenn die vierte Einheit (24) kein Paar mit dem betreffenden Reflexionspunkt als primärem oder sekundärem Reflexionspunkt gebildet hat.

15. Fahrzeug (1) mit einem Parkassistenzsystem (3), das zum halb- oder vollautonomen Fahren des Fahrzeugs (1) eingerichtet ist, wobei das Fahrzeug (1) und/oder das Parkassistenzsystem (3) eine Messvorrichtung (6) nach Anspruch 14 umfasst.

## Claims

1. A method for measuring a lateral environment (5) of a vehicle (1) provided with at least one lateral ultrasonic transceiver (4), comprising the steps of:
• a) controlling (S1) the at least one ultrasonic transceiver (4) at a plurality of transmitting and receiving positions (40) along a lateral direction of travel (18) of the vehicle (1) to transmit a respective transmission signal in a transverse direction (20) perpendicular to the direction of travel (18) of the vehicle (1) and to receive a respective received signal curve (10) reflected from the lateral environment;
• b) identifying (S2) a number of echo signals in the respective received signal curve (10);
• c) forming a set of reflection points (100) by multiple times trilaterating a respective reflection point (110, 120, 130, 140) in the lateral environment (5) and storing it in the set of reflection points (100), based on respectively two received signal curves from the plurality of received signal curves (10) and based on respectively one echo signal from each of the two received signal curves (10);
• d) forming a plurality of pairs from a respective primary reflection point (111, 112) and a respective secondary reflection point (121, 123) of the set of reflection points (100), which are identified on the basis of an at least position-based criterion as reflection points of a direct and/or indirect reflection at a same object section (31, 32, 33) in the lateral environment (5); and
• e) determining an object height at a respective one of the reflection points (110, 120, 130, 140) in the lateral environment as high if the reflection point in question is a primary reflection point (111, 112) of one of the formed pairs, and as low if no pair with the reflection point in question as a primary or secondary reflection point was formed in step d).

2. The method according to claim 1, **characterized in that** the criterion in step e) comprises that a respective secondary reflection point (121, 123) is arranged within a geometric search window (91, 92) defined relative to the respective primary reflection point (111, 112).

3. The method according to claim 2, **characterized in that** the geometric search window (92) comprises at least one reflection point (121, 123) which was trilaterated on the basis of respective two echo signals which were identified in different received signal curves than the two echo signals on the basis of which the primary reflection point (112) was trilaterated.

4. The method according to claim 2, **characterized in that** the geometric search window (91, 92) widens laterally in the transverse direction with increasing distance to the primary reflection point (111, 112).

5. The method according to any one of the preceding claims, **characterized in that** among a plurality of reflection points (121, 123) which fulfill the criterion with respect to a respective primary reflection point (112), the reflection point (123) closest to the primary reflection point (112) is selected as the secondary reflection point of the pair to be formed.

6. The method according to any one of the preceding claims, **characterized in that** the echo signals identified in the respective received signal curve (10) are ordered according to their chronological sequence and, in step c), echo signals of the same order from received signal curves (10) received at adjacent receiving positions are used to trilaterate a respective reflection point (110, 120, 130, 140).

7. The method according to claim 6, **characterized in that** the criterion in step e) comprises that the order of the echo signals on the basis of which the secondary reflection point (121) was trilaterated is one higher than the order of the echo signals on the basis of which the primary reflection point (111, 112) was trilaterated.

8. The method according to any one of the preceding claims, **characterized in that** the criterion in step e) comprises that the secondary reflection point (121, 123, 132, 131, 133) is located further away from the transmitting and receiving point of the echo signal associated with the primary reflection point (111, 112) than the primary reflection point (111, 112).

9. The method according to any one of the preceding claims, **characterized in that** the criterion in step e) comprises that a distance between the primary reflection point (111, 112) and the secondary reflection point (121, 123) is smaller than a predetermined maximum distance.

10. The method according to any one of the preceding claims, **characterized in that** the criterion in step e) comprises that a signal strength of at least one echo signal on the basis of which the secondary reflection point (121, 123) was trilaterated is reduced by no more than a predetermined factor compared to a signal strength of at least one echo signal on the basis of which the primary reflection point (111, 112) was trilaterated.

11. The method according to any one of the preceding claims, **characterized in that** the trilaterated position of the reflection point (111-133) as well as optionally one or more attributes are stored in the set of reflection points (100) for a respective reflection point (111-133), and step e) is carried out after completion of steps a), b) and c) on the basis of the positions stored in the stored set of reflection points (100) and, if applicable, the stored attributes of the reflection points (111-133).

12. A method for parking a vehicle (1) provided with at least one lateral ultrasonic transceiver (4) and a parking assistance system (3), comprising:
• Performing the method according to any one of claims 1 to 11 to determine the positions and the object heights at a plurality of primary reflection points (110, 120, 130) in the lateral environment (5) of the vehicle (1);
• Determining a parking space in the lateral environment (5) that is free of reflection points having an object height determined as "high"; and
• Parking the vehicle (1) into the parking space with the aid of the parking assistance system (3).

13. A computer program product comprising instructions which, when executed by a computing device, cause the computing device to carry out the method according to any one of claims 1 to 11.

14. A measuring device (6) for a parking assistance system (3) of a vehicle (1) provided with at least one lateral ultrasonic transceiver (4), wherein the measuring device (6) is configured to measure a lateral environment (5) of the vehicle (6) and comprises:
• a) a first unit (21) configured to control the at least one ultrasonic transceiver (4) at a plurality of transmitting and receiving positions (40) along a lateral direction of travel (18) of the vehicle (1) to transmit a respective transmission signal in a transverse direction (20) perpendicular to the direction of travel (18) of the vehicle (1) and to receive a respective received signal curve (10) reflected from the lateral environment (5);
• b) a second unit (22) configured to identify a number of echo signals in the respective received signal curve (10);
• c) a third unit (23) configured to form a set of reflection points (100) by multiple times trilaterating a respective reflection point (110, 120, 130, 140) in the lateral environment (5) and storing it in the set of reflection points (100), based on respectively two received signal curves (10) from the plurality of received signal curves (10) and based on respectively one echo signal from each of the two received signal curves (10);
• d) a fourth unit (24) configured to form a plurality of pairs from a respective primary reflection point (111, 112) and a respective secondary reflection point (121, 123) of the set of reflection points (100), which are identified on the basis of an at least position-based criterion as reflection points of a direct and/or indirect reflection at a same object section (31, 32, 33) in the lateral environment (5); and
• e) a fifth unit (25) configured to determine an object height at a respective one of the reflection points (110, 120, 130) in the lateral environment as high if the reflection point in question is a primary reflection point (111, 112) of one of the formed pairs, and to determine it as low if the fourth unit (24) has not formed a pair with the reflection point in question as a primary or secondary reflection point.

15. A vehicle (1) comprising a parking assistance system (3) configured for semi-autonomous or fully autonomous driving of the vehicle (1), wherein the vehicle (1) and/or the parking assistance system (3) comprises a measuring device (6) according to claim 14.

## Revendications

1. Procédé de mesure d'un environnement latéral (5) d'un véhicule (1) pourvu d'au moins un émetteur-récepteur à ultrasons latéral (4), comprenant les étapes consistant à :
• a) commander (S1) l'au moins un émetteur-récepteur à ultrasons (4) à une pluralité de positions d'émission et de réception (40) le long d'une direction de déplacement latérale (18) du véhicule (1) pour émettre un signal d'émission respectif dans une direction transversale (20) perpendiculaire à la direction de déplacement (18) du véhicule (1) et recevoir une courbe de signal de réception respective (10) réfléchie par l'environnement latéral;
• b) identifier (S2) un certain nombre de signaux d'écho dans la courbe de signal de réception respective (10);
• c) former un ensemble de points de réflexion (100) en trilatérant de multiples fois et en enregistrant dans l'ensemble de points de réflexion (100) un point de réflexion respectif (110, 120, 130, 140) dans l'environnement latéral (5) sur la base de respectivement deux courbes de signal de réception parmi la pluralité de courbes de signal de réception (10) et sur la base de respectivement un signal d'écho provenant de chacune des deux courbes de signal de réception (10);
• d) former une pluralité de paires à partir d'un point de réflexion primaire respectif (111, 112) et d'un point de réflexion secondaire respectif (121, 123) de l'ensemble de points de réflexion (100), qui sont identifiés sur la base d'un critère au moins fondé sur la position en tant que points de réflexion d'une réflexion directe et/ou indirecte sur une même section d'objet (31, 32, 33) dans l'environnement latéral (5); et
• e) déterminer une hauteur d'objet au niveau d'un point de réflexion respectif parmi les points de réflexion (110, 120, 130, 140) dans l'environnement latéral comme étant élevée lorsque le point de réflexion concerné est un point de réflexion primaire (111, 112) de l'une des paires formées, et comme étant basse lorsque, à l'étape d), aucune paire n'a été formée avec le point de réflexion concerné en tant que point de réflexion primaire ou secondaire.

2. Procédé selon la revendication 1, **caractérisé en ce que** le critère à l'étape e) comprend le fait qu'un point de réflexion secondaire respectif (121, 123) est agencé à l'intérieur d'une fenêtre de recherche géométrique (91, 92) définie par rapport au point de réflexion primaire respectif (111, 112).

3. Procédé selon la revendication 2, **caractérisé en ce que** la fenêtre de recherche géométrique (92) comprend au moins un point de réflexion (121, 123) qui a été trilatéré sur la base de respectivement deux signaux d'écho qui ont été identifiés dans des courbes de signal de réception différentes des deux signaux d'écho sur la base desquels le point de réflexion primaire (112) a été trilatéré.

4. Procédé selon la revendication 2, **caractérisé en ce que** la fenêtre de recherche géométrique (91, 92) s'élargit latéralement dans la direction transversale au fur et à mesure que la distance par rapport au point de réflexion primaire (111, 112) augmente.

5. Procédé selon l'une des revendications précédentes, **caractérisé en ce que**, parmi une pluralité de points de réflexion (121, 123) qui satisfont au critère par rapport à un point de réflexion primaire respectif (112), le point de réflexion (123) le plus proche du point de réflexion primaire (112) est choisi comme point de réflexion secondaire de la paire à former.

6. Procédé selon l'une des revendications précédentes, **caractérisé en ce que** les signaux d'écho identifiés dans la courbe de signal de réception respective (10) sont ordonnés selon leur séquence chronologique et, à l'étape c), des signaux d'écho de même ordre provenant de courbes de signal de réception (10) reçues à des positions de réception adjacentes sont utilisés pour trilatérer un point de réflexion respectif (110, 120, 130, 140).

7. Procédé selon la revendication 6, **caractérisé en ce que** le critère à l'étape e) comprend le fait que l'ordre des signaux d'écho sur la base desquels le point de réflexion secondaire (121) a été trilatéré est supérieur de un à l'ordre des signaux d'écho sur la base desquels le point de réflexion primaire (111, 112) a été trilatéré.

8. Procédé selon l'une des revendications précédentes, **caractérisé en ce que** le critère à l'étape e) comprend le fait que le point de réflexion secondaire (121, 123, 132, 131, 133) est plus éloigné du point d'émission et de réception du signal d'écho associé au point de réflexion primaire (111, 112) que ne l'est le point de réflexion primaire (111, 112).

9. Procédé selon l'une des revendications précédentes, **caractérisé en ce que** le critère à l'étape e) comprend le fait qu'une distance entre le point de réflexion primaire (111, 112) et le point de réflexion secondaire (121, 123) est inférieure à une distance maximale prédéterminée.

10. Procédé selon l'une des revendications précédentes, **caractérisé en ce que** le critère à l'étape e) comprend le fait qu'une intensité de signal d'au moins un signal d'écho sur la base duquel le point de réflexion secondaire (121, 123) a été trilatéré n'est pas réduite de plus d'un facteur prédéterminé par rapport à une intensité de signal d'au moins un signal d'écho sur la base duquel le point de réflexion primaire (111, 112) a été trilatéré.

11. Procédé selon l'une des revendications précédentes, **caractérisé en ce que**, dans l'ensemble de points de réflexion (100), la position trilatérée du point de réflexion (111-133) ainsi que facultativement un ou plusieurs attributs sont enregistrés pour un point de réflexion respectif (111-133), et l'étape e) est exécutée après l'achèvement des étapes a), b) et c) sur la base des positions enregistrées dans l'ensemble de points de réflexion enregistré (100) et, le cas échéant, des attributs enregistrés des points de réflexion (111-133).

12. Procédé de stationnement d'un véhicule (1) qui est pourvu d'au moins un émetteur-récepteur à ultrasons latéral (4) et d'un système d'assistance au stationnement (3), comprenant :
• l'exécution du procédé selon l'une des revendications 1 à 11 pour déterminer les positions et les hauteurs d'objet au niveau d'une pluralité de points de réflexion primaires (110, 120, 130) dans l'environnement latéral (5) du véhicule (1);
• la détermination d'une place de stationnement dans l'environnement latéral (5) qui est exempte de points de réflexion ayant une hauteur d'objet déterminée comme « élevée »; et
• le stationnement du véhicule (1) dans la place de stationnement à l'aide du système d'assistance au stationnement (3).

13. Produit programme d'ordinateur, comprenant des instructions qui, lorsqu'elles sont exécutées par un dispositif informatique, amènent celui-ci à exécuter le procédé selon l'une des revendications 1 à 11.

14. Dispositif de mesure (6) pour un système d'assistance au stationnement (3) d'un véhicule (1) pourvu d'au moins un émetteur-récepteur à ultrasons latéral (4), dans lequel le dispositif de mesure (6) est conçu pour mesurer un environnement latéral (5) du véhicule (6) et comprend :
• a) une première unité (21) qui est conçue pour commander l'au moins un émetteur-récepteur à ultrasons (4) à une pluralité de positions d'émission et de réception (40) le long d'une direction de déplacement latérale (18) du véhicule (1) pour émettre un signal d'émission respectif dans une direction transversale (20) perpendiculaire à la direction de déplacement (18) du véhicule (1) et recevoir une courbe de signal de réception respective (10) réfléchie par l'environnement latéral (5);
• b) une deuxième unité (22) qui est conçue pour identifier un certain nombre de signaux d'écho dans la courbe de signal de réception respective (10);
• c) une troisième unité (23) qui est conçue pour former un ensemble de points de réflexion (100) en trilatérant de multiples fois et en enregistrant dans l'ensemble de points de réflexion (100) un point de réflexion respectif (110, 120, 130, 140) dans l'environnement latéral (5) sur la base de respectivement deux courbes de signal de réception (10) parmi la pluralité de courbes de signal de réception (10) et sur la base de respectivement un signal d'écho provenant de chacune des deux courbes de signal de réception (10);
• d) une quatrième unité (24) qui est conçue pour former une pluralité de paires à partir d'un point de réflexion primaire respectif (111, 112) et d'un point de réflexion secondaire respectif (121, 123) de l'ensemble de points de réflexion (100), qu'elle identifie sur la base d'un critère au moins fondé sur la position en tant que points de réflexion d'une réflexion directe et/ou indirecte sur une même section d'objet (31, 32, 33) dans l'environnement latéral (5); et
• e) une cinquième unité (25) qui est conçue pour déterminer une hauteur d'objet au niveau d'un point de réflexion respectif parmi les points de réflexion (110, 120, 130) dans l'environnement latéral comme étant élevée lorsque le point de réflexion concerné est un point de réflexion primaire (111, 112) de l'une des paires formées, et pour la déterminer comme étant basse lorsque la quatrième unité (24) n'a formé aucune paire avec le point de réflexion concerné en tant que point de réflexion primaire ou secondaire.

15. Véhicule (1) comprenant un système d'assistance au stationnement (3) qui est conçu pour la conduite semi-autonome ou entièrement autonome du véhicule (1), dans lequel le véhicule (1) et/ou le système d'assistance au stationnement (3) comprend un dispositif de mesure (6) selon la revendication 14.
